(19) Europäisches Patentamt / European Patent Office / Office européen des brevets

(11) **EP 3 467 845 B1**

(12) **EUROPEAN PATENT SPECIFICATION**

(45) Date of publication and mention
of the grant of the patent:
**03.06.2020 Bulletin 2020/23**

(51) Int Cl.:
*H01M 10/0562* (2010.01)   *H01M 10/0525* (2010.01)
*H01B 1/06* (2006.01)   *H01B 1/10* (2006.01)
*H01M 4/13* (2010.01)   *H01M 4/62* (2006.01)

(21) Application number: **17802619.1**

(22) Date of filing: **16.05.2017**

(86) International application number:
**PCT/JP2017/018287**

(87) International publication number:
**WO 2017/204027 (30.11.2017 Gazette 2017/48)**

(54) **SOLID ELECTROLYTE COMPOSITION, ELECTRODE SHEET FOR ALL-SOLID-STATE SECONDARY BATTERY AS WELL AS METHODS FOR MANUFACTURING THE SAME, AND ALL-SOLID-STATE SECONDARY BATTERY AS WELL AS METHOD FOR MANUFACTURING THE SAME**

FESTELEKTROLYTZUSAMMENSETZUNG, ELEKTRODENBLATT FÜR FESTKÖRPERSEKUNDÄRBATTERIE SOWIE VERFAHREN ZUR HERSTELLUNG DESSELBEN, UND FESTKÖRPERSEKUNDÄRBATTERIE SOWIE VERFAHREN ZUR HERSTELLUNG DERSELBEN

COMPOSITION D'ÉLECTROLYTE SOLIDE, FEUILLE D'ÉLECTRODE POUR BATTERIE SECONDAIRE ENTIÈREMENT SOLIDE AINSI QUE SES PROCÉDÉS DE FABRICATION, ET BATTERIE SECONDAIRE ENTIÈREMENT SOLIDE AINSI QUE SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.05.2016 JP 2016102288**
**11.05.2017 JP 2017094611**

(43) Date of publication of application:
**10.04.2019 Bulletin 2019/15**

(73) Proprietor: **FUJIFILM Corporation**
**Tokyo 106-8620 (JP)**

(72) Inventors:
• **MAKINO, Masaomi**
**Ashigarakami-gun**
**Kanagawa 258-8577 (JP)**
• **MOCHIZUKI, Hiroaki**
**Ashigarakami-gun**
**Kanagawa 258-8577 (JP)**
• **MIMURA, Tomonori**
**Ashigarakami-gun**
**Kanagawa 258-8577 (JP)**

(74) Representative: **Hoffmann Eitle**
**Patent- und Rechtsanwälte PartmbB**
**Arabellastraße 30**
**81925 München (DE)**

(56) References cited:
**WO-A1-2012/026583   WO-A1-2015/129704**
**WO-A1-2016/136983   JP-A- 2015 082 362**
**JP-A- 2017 016 796   US-A1- 2014 127 579**
**US-A1- 2015 086 875**

**Description**

**BACKGROUND OF THE INVENTION**

1. Field of the Invention

The present invention relates to a solid electrolyte composition, an electrode sheet for an all-solid state secondary battery, an all-solid state secondary battery, and methods for manufacturing an electrode sheet for an all-solid state secondary battery and an all-solid state secondary battery.

2. Description of the Related Art

A lithium ion secondary battery is a storage battery which has a negative electrode, a positive electrode and an electrolyte sandwiched between the negative electrode and the positive electrode and enables charging and discharging by the reciprocal migration of lithium ions. In the related art, in lithium ion secondary batteries, an organic electrolytic solution has been used as the electrolyte. However, in organic electrolytic solutions, liquid leakage is likely to occur, there is a concern that a short circuit and ignition may be caused in batteries due to overcharging or overdischarging, and there is a demand for additional improvement in reliability and safety.

Under such circumstances, all-solid state secondary batteries in which an inorganic solid electrolyte is used instead of the organic electrolytic solution are attracting attention. In all-solid state secondary batteries, all of the negative electrode, the electrolyte, and the positive electrode are solid, safety and reliability which are considered as a problem of batteries in which the organic electrolytic solution is used can be significantly improved, and it also becomes possible to extend service lives. Furthermore, all-solid state secondary batteries can be provided with a structure in which the electrodes and the electrolyte are directly disposed in series. Therefore, it becomes possible to increase the energy density to be higher than that of secondary batteries in which the organic electrolytic solution is used, and the application to electric vehicles, large-sized storage batteries, and the like is anticipated.

Due to the respective advantages described above, development of all-solid state secondary batteries is underway as next-generation lithium ion batteries (New Energy and Industrial Technology Development Organization (NEDO), Fuel Cell and Hydrogen Technologies Development Department, Electricity Storage Technology Development Section, "NEDO 2013 Roadmap for the Development of Next Generation Automotive Battery Technology" (August, 2013)). In these all-solid state secondary batteries, the addition of binder particles (bonding agent) such as a specific high-molecular-weight compound to at least any layer of an active material layer of the negative electrode, a solid electrolyte layer, or an active material layer of the positive electrode for the purpose of improving a bonding property among solid particles is proposed.

For example, JP2011-014387A describes an all-solid state secondary battery containing a graft polymer as a binder. In addition, JP2013-8611A describes an all-solid state secondary battery including a bonding agent made of a particulate polymer containing a surfactant having a polyoxyethylene chain.

WO 2015/129704 A1 relates to a solid electrolyte composition containing an inorganic solid electrolyte, a binder comprising core/shell-type particles having a core part and a shell part, and a dispersion medium, wherein the difference between the glass transition temperature of a polymer compound constituting the core part and the glass transition temperature of a polymer compound constituting the shell part is at least 50°C.

US 2015/086875 A1 relates to an electrode for all-solid-state secondary batteries that comprises a collector, a conductive adhesive layer and an electrode mixture layer. The electrode mixture layer contains a binder, an inorganic solid electrolyte that contains sulfur atoms, and an electrode active material. The conductive adhesive layer contains conductive particles and a binder for adhesive layers, said binder being composed of a diene polymer. The diene polymer contains 10-75% by mass of a diene monomer unit, and has an iodine number of 5-350 mg/100 mg. The sulfur atoms contained in the inorganic solid electrolyte and carbon-carbon double bonds of the diene polymer are crosslinked with each other.

US 2014/127579 A1 relates to an all-solid state secondary cell which has a positive electrode active material layer, negative electrode active material layer, and solid electrolyte layer, wherein at least one of said positive electrode active material layer, said negative electrode active material layer, and said solid electrolyte layer includes an inorganic solid electrolyte and a binder comprised of an average particle size 30 to 300 nm particulate-shaped polymer and said particulate-shaped polymer is present in said positive electrode active material layer, said negative electrode active material layer, and said solid electrolyte layer in a state holding the particulate state.

WO 2012/026583 A1 relates to an all-solid-state secondary battery comprising: a positive electrode having a positive electrode active material layer; a negative electrode having a negative electrode active material layer; and a solid electrolyte layer between the positive electrode active material layer and the negative electrode active material layer. The all-solid-state secondary battery is characterised by: at least one layer among the positive electrode active material layer, the negative electrode active material layer, and the solid electrolyte layer having a solid electrolyte, and a polymer including a nitrile group-containing polymerisation unit; the content ratio of the nitrile group-containing polymerisation unit in the polymer being 2-30 mass%; and the iodine value of the polymer being 0mg/100mg - 30mg/100mg inclusive.

JP 2015 082362 A relates to an electrode slurry for all-solid batteries comprising two or more kinds of solvents. The value (absolute value) of the difference between the solvent having the largest volume fraction of the two or more kinds of solvents and the second solvent in relative dielectric constant is made a value equal to or larger than a predetermined value, whereby the binding force of an electrode layer to a collector, which is produced by the electrode slurry can be increased.

WO 2016/136983 A1 relates to a solid electrolyte composition, a cell electrode sheet using the solid electrolyte composition, and a method for manufacturing the cell electrode sheet, as well as an all-solid-state secondary cell and a method for manufacturing same, the solid electrolyte composition containing: organic particles (A) having a first particle with a polyurethane structure and/or a polyurea structure, and a plurality of second particles covering the surface of the first particle, the second particles having smaller grain diameter than the first particle and having a polyurea structure; and an inorganic solid electrolyte (B) having conductivity of ions of a metal belonging to group 1 or 2 of the periodic table.

JP 2017 016796 A relates to an all-solid battery that includes a positive electrode current collector layer, a positive electrode active material layer, a solid electrolyte layer containing solid electrolyte particles, a negative electrode active material layer, and a negative electrode current collector layer which are laminated. In the all-solid state battery, the solid electrolyte layer contains ethyl vinyl acetate whose amount is equal to or more than 70 mass% of the mass of the solid electrolyte layer. Ethyl vinyl acetate is present on the entire surfaces of the solid electrolyte particles containing the neighborhoods of the contact surfaces at which the solid electrolyte particles are in contact with one another.

## SUMMARY OF THE INVENTION

In recent years, development of all-solid state secondary batteries has been rapidly progressing, and performance demanded for all-solid state secondary batteries also has improved. In particular, in addition to the improvement of a bonding property among solid particles, development of all-solid state secondary batteries having a high battery voltage is being desired.

An object of the present invention is to provide a solid electrolyte composition capable of satisfying both the miniaturization of an inorganic solid electrolyte and the suppression of a decrease in the ion conductivity. In addition, another object of the present invention is to provide an electrode sheet for an all-solid state secondary battery having an excellent bonding property and an all-solid state secondary battery having an excellent bonding property and an excellent battery voltage. Furthermore, still another object of the present invention is to provide methods for manufacturing an electrode sheet for an all-solid state secondary battery and an all-solid state secondary battery which have the above-described performance respectively.

As a result of intensive studies, the present inventors found a fact that a solid electrolyte composition containing a dispersion medium including a specific saturated aliphatic compound or alicyclic compound and a specific aromatic compound at a specific mass ratio, a specific inorganic solid electrolyte, and a binder is capable of satisfying both the miniaturization of the inorganic solid electrolyte and the suppression of a decrease in the ion conductivity. In addition, it was found that the use of the above-described solid electrolyte composition enables the realization of an electrode sheet for an all-solid state secondary battery having an excellent bonding property and an all-solid state secondary battery having an excellent bonding property and an excellent battery voltage. In addition, it was found that an electrode sheet for an all-solid state secondary battery and an all-solid state secondary battery which have an excellent bonding property can be manufactured using the manufacturing methods of the present invention. The present invention was completed by repeating additional studies on the basis of the above-described finding.

That is, the above-described objects are achieved by the following means.

(1) A solid electrolyte composition comprising: an inorganic solid electrolyte (A) having conductivity of ions of metals belonging to Group I or II of the periodic table; a binder (B1); and a dispersion medium (C) containing at least one dispersion medium (C1) below and at least one dispersion medium (C2) below at a mass ratio (dispersion medium (C1)/dispersion medium (C2)) of 20/80 to 99/1,
dispersion medium (C1): a saturated aliphatic compound or alicyclic compound having a boiling point of 80°C or higher and lower than 200°C, and
dispersion medium (C2): an aromatic compound having a boiling point of 100°C or higher and lower than 220°C.

(2) The solid electrolyte composition according to (1), in which a difference between a boiling point $TC_1$ of the dispersion medium (C1) and a boiling point $TC_2$ of the dispersion medium (C2) satisfies the following expression. $(TC_2-TC_1)\geq10°C$, and wherein the dispersion medium (C1) is preferably an alicyclic compound, and wherein both the dispersion medium (C1) and the dispersion medium (C2) more preferably include only carbon atoms and hydrogen atoms.

(3) The solid electrolyte composition according to (1) or (2), in which the binder (B1) is at least one selected from the group consisting of an acrylic resin, a polyurethane resin, a polyurea resin, a polyimide resin, a fluorine-containing resin, and a hydrocarbon-based thermoplastic resin, and wherein the binder (B1) preferably has a polar group, and wherein the binder (B1) is more preferably a particulate polymer having a volume-average particle diameter of 0.05 to 50 $\mu$m.

(4) The solid electrolyte composition according to any one of (1) to (3), in which the inorganic solid electrolyte (A) is a sulfide-based inorganic solid electrolyte, and preferably further comprising: an active material.

(5) The solid electrolyte composition according to any one of (1) to (4), further comprising: a conductive auxiliary agent.

(6) The solid electrolyte composition according to any one of (1) to (5), further comprising: a lithium salt.

(7) The solid electrolyte composition according to any one of (1) to (6), further comprising: an ionic liquid.

(8) An electrode sheet for an all-solid state secondary battery including a primer layer between an active material layer formed from the solid electrolyte composition according to (1) and a collector, wherein the active material layer contains the binder (B1), the primer layer contains a binder (B2), and the binder (B2) is insoluble in the dispersion medium (C1), and is soluble in the dispersion medium (C2).

(9) The electrode sheet for an all-solid state secondary battery according to (8), wherein a polymer constituting the binder (B2) includes a rubber material.

(10) The electrode sheet for an all-solid state secondary battery according to (8) or (9), in which the binder (B2) is partially eluted to the active material layer.

(11) The electrode sheet for an all-solid state secondary battery according to (10), in which a polymer constituting the binder (B2) includes hydrocarbon-based rubber.

(12) A method for manufacturing the electrode sheet for an all-solid state secondary battery according to (10) or (11), comprising: a step of forming the primer layer using the dispersion medium (C2) on the collector, drying the primer layer, and applying the solid electrolyte composition according to (1) onto the primer layer.

(13) A method for manufacturing the electrode sheet for an all-solid state secondary battery according to (10) or (11), comprising: a step of applying the solid electrolyte composition according to (1) onto the primer layer and then heating and drying the solid electrolyte composition, in which a heating and drying temperature is the boiling point $TC_1$ of the dispersion medium (C1) or higher and lower than the boiling point $TC_2$ of the dispersion medium (C2).

(14) An all-solid state secondary battery comprising: the electrode sheet for an all-solid state secondary battery according to (10) or (11).

(15) A method for manufacturing an all-solid state secondary battery, in which an all-solid state secondary battery is manufactured using the method for manufacturing an electrode sheet for an all-solid state secondary battery according to (12) or (13).

In the present specification, numerical ranges expressed using "to" include numerical values before and after the "to" as the lower limit value and the upper limit value.

In the present specification, "acrylic" or "(meth)acrylic" that is simply expressed is used to refer to methacrylic and/or acrylic. In addition, "acryloyl" or "(meth)acryloyl" that is simply expressed is used to refer to methacryloyl and/or acryloyl.

In the present specification, in a case in which there is a plurality of substituents, linking groups, and the like (hereinafter, referred to as substituents and the like) represented by a specific reference sign or a case in which a plurality of substituents and the like is simultaneously or selectively regulated, it means that the respective substituents and the like may be identical to or different from one another. What has been described above is also true for the regulation of the number of substituents and the like.

In the present specification, a mass-average molecular weight (Mw) can be measured as a polystyrene-equivalent molecular weight by means of GPC unless particularly otherwise described. At this time, a GPC apparatus HLC-8220 (manufactured by Tosoh Corporation) is used, G3000HXL+G2000HXL is used as a column, a flow rate at 23°C is 1 mL/min, and the molecular weight is detected by RI. An eluent can be selected from tetrahydrofuran (THF), chloroform, N-methyl-2-pyrrolidone (NMP), and m-cresol/chloroform (manufactured by Shonanwako Junyaku KK), and THF is used in a case in which a subject needs to be dissolved.

In the solid electrolyte composition of the present invention, the inorganic solid electrolyte is miniaturized, and a decrease in the ion conductivity is suppressed. In addition, the electrode sheet for an all-solid state secondary battery of the present invention has an excellent bonding property, and the all-solid state secondary battery of the present invention has an excellent bonding property and an excellent battery voltage.

In addition, according to the manufacturing methods of the present invention, it is possible to preferably manufacture an electrode sheet for an all-solid state secondary battery and an all-solid state secondary battery respectively which have the above-described excellent performance.

The above-described and other characteristics and advantages of the present invention will be further clarified by the following description with appropriate reference to the accompanying drawings.

**BRIEF DESCRIPTION OF THE DRAWINGS**

Fig. 1 is a vertical cross-sectional view schematically illustrating an all-solid state secondary battery according to a preferred embodiment of the present invention.
Fig. 2 is a vertical cross-sectional view schematically illustrating a testing device used in examples.
Fig. 3 is a vertical cross-sectional view schematically illustrating an all-solid state secondary battery (coin battery) produced in examples.

**DESCRIPTION OF THE PREFERRED EMBODIMENTS**

<Preferred embodiment>

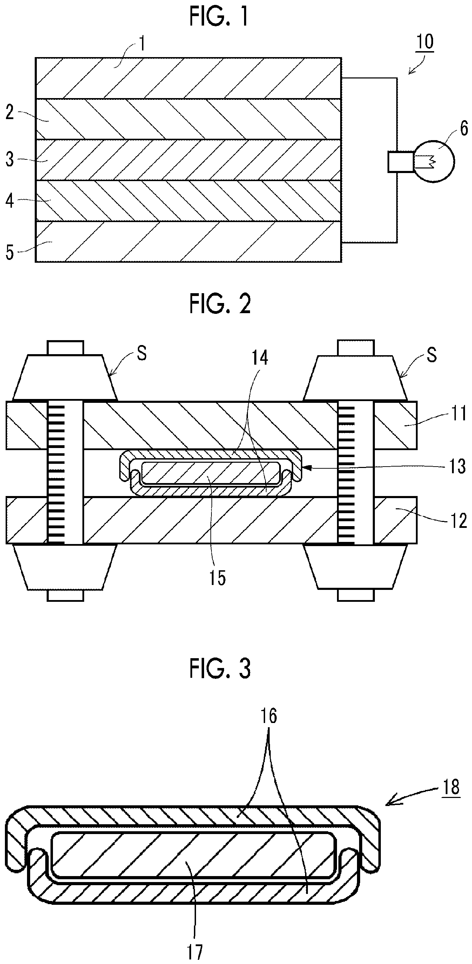

Fig. 1 is a cross-sectional view schematically illustrating an all-solid state secondary battery (lithium ion secondary battery) according to a preferred embodiment of the present invention. In the case of being seen from the negative electrode side, an all-solid state secondary battery 10 of the present embodiment has a negative electrode collector 1, a negative electrode active material layer 2, a solid electrolyte layer 3, a positive electrode active material layer 4, and a positive electrode collector 5 in this order. The respective layers are in contact with one another and have a laminated structure. In a case in which the above-described structure is employed, during charging, electrons ($e^-$) are supplied to the negative electrode side, and lithium ions ($Li^+$) are accumulated on the negative electrode side. On the other hand, during discharging, the lithium ions ($Li^+$) accumulated on the negative electrode side return to the positive electrode, and electrons are supplied to an operation portion 6. In an example illustrated in the drawing, an electric bulb is employed as the operation portion 6 and is lit by discharging. A solid electrolyte composition of the present invention can be preferably used as a material used to shape the negative electrode active material layer, the positive electrode active material layer, and the solid electrolyte layer and can be particularly preferably used as a material used to shape the negative electrode active material layer and the positive electrode active material layer. Meanwhile, although not illustrated in Fig. 1, an all-solid state secondary battery of the present invention has a primer layer between the negative electrode collector 1 and the negative electrode active material layer 2 and/or between the positive electrode active material layer 4 and the positive electrode collector 5.
In the present specification, the positive electrode active material layer (hereinafter, also referred to as the positive electrode layer) and the negative electrode active material layer (hereinafter, also referred to as the negative electrode layer) will be collectively referred to as the active material layer in some cases.
The layer thicknesses of the positive electrode active material layer 4, the solid electrolyte layer 3, and the negative electrode active material layer 2 are not particularly limited. Meanwhile, in a case in which the dimensions of ordinary batteries are taken into account, the thicknesses are preferably 10 to 1,000 $\mu$m and more preferably 20 $\mu$m or more and less than 500 $\mu$m. In the all-solid state secondary battery of the present invention, the thickness of at least one layer of the positive electrode active material layer 4, the solid electrolyte layer 3, or the negative electrode active material layer 2 is still more preferably 50 $\mu$m or more and less than 500 $\mu$m. In addition, the thickness of the primer layer is not particularly limited, but is preferably 1 $\mu$m or more and less than 50 $\mu$m and more preferably 20 $\mu$m or more and less than 30 $\mu$m.

<Solid electrolyte composition>

The solid electrolyte composition of the present invention contains an inorganic solid electrolyte (A) having conductivity of ions of metals belonging to Group I or II of the periodic table, a binder (B1), and a dispersion medium (C) containing at least one dispersion medium (C1) below and at least one dispersion medium (C2) below at a mass ratio (dispersion medium (C1)/dispersion medium (C2)) of 20/80 to 99/1.

Dispersion medium (C1): a saturated aliphatic compound or alicyclic compound having a boiling point of 80°C or higher and lower than 200°C
Dispersion medium (C2): an aromatic compound having a boiling point of 100°C or higher and lower than 220°C

Hereinafter, the inorganic solid electrolyte (A) and the dispersion medium (C) will be respectively referred to as the inorganic solid electrolyte and the dispersion medium in some cases. In addition, either or both of the binder (B1) and the binder (B2) will be referred to as the binder in some cases.

(Inorganic solid electrolyte (A))

The inorganic solid electrolyte is an inorganic solid electrolyte, and the solid electrolyte refers to a solid-form electrolyte capable of migrating ions therein. The inorganic solid electrolyte is clearly differentiated from organic solid electrolytes (high-molecular-weight electrolytes represented by polyethylene oxide (PEO) or the like and organic electrolyte salts represented by lithium bis(trifluoromethanesulfonyl)imide (LiTFSI)) since the inorganic solid electrolyte does not include any organic substances as a principal ion-conductive material. In addition, the inorganic solid electrolyte is a solid in a static state and is thus, generally, not disassociated or liberated into cations and anions. Due to this fact, the inorganic solid electrolyte is also clearly differentiated from inorganic electrolyte salts of which cations and anions are disassociated or liberated in electrolytic solutions or polymers ($LiPF_6$, $LiBF_4$, LiFSI, LiCl, and the like). The inorganic solid electrolyte is not particularly limited as long as the inorganic solid electrolyte has conductivity of ions of metals belonging to Group I or II of the periodic table and is generally a substance not having electron conductivity.

In the present invention, the inorganic solid electrolyte has conductivity of ions of metals belonging to Group I or II of the periodic table. As the inorganic solid electrolyte, it is possible to appropriately select and use solid electrolyte materials that are applied to this kind of products. Typical examples of the inorganic solid electrolyte include (i) sulfide-based inorganic solid electrolytes and (ii) oxide-based inorganic solid electrolytes. In the present invention, the sulfide-based inorganic solid electrolytes are preferably used since it is possible to form a more favorable interface between the active material and the inorganic solid electrolyte.

(i) Sulfide-based inorganic solid electrolytes

Sulfide-based inorganic solid electrolytes are preferably inorganic solid electrolytes which contain sulfur atoms (S), have ion conductivity of metals belonging to Group I or II of the periodic table, and have electron-insulating properties. The sulfide-based inorganic solid electrolytes are preferably inorganic solid electrolytes which, as elements, contain at least Li, S, and P and have a lithium ion conductivity, but the sulfide-based inorganic solid electrolytes may also include elements other than Li, S, and P depending on the purposes or cases.

Examples thereof include lithium ion-conductive inorganic solid electrolytes satisfying a composition represented by Formula (1).

$$L_{a1}M_{b1}P_{c1}S_{d1}A_{e1} \qquad \text{Formula (1)}$$

In the formula, L represents an element selected from Li, Na, and K and is preferably Li. M represents an element selected from B, Zn, Sn, Si, Cu, Ga, Sb, Al, and Ge. A represents an element selected from I, Br, Cl, and F. a1 to e1 represent the compositional ratios among the respective elements, and a1:b1:c1:d1:e1 satisfies 1 to 12:0 to 5:1:2 to 12:0 to 10. Furthermore, a1 is preferably 1 to 9 and more preferably 1.5 to 7.5. b1 is preferably 0 to 3. Furthermore, d1 is preferably 2.5 to 10 and more preferably 3.0 to 8.5. Furthermore, e1 is preferably 0 to 5 and more preferably 0 to 3.

The compositional ratios among the respective elements can be controlled by adjusting the amounts of raw material compounds blended to manufacture the sulfide-based inorganic solid electrolyte as described below.

The sulfide-based inorganic solid electrolytes may be non-crystalline (glass) or crystallized (made into glass ceramic) or may be only partially crystallized. For example, it is possible to use Li-P-S-based glass containing Li, P, and S or Li-P-S-based glass ceramic containing Li, P, and S.

The sulfide-based inorganic solid electrolytes can be manufactured by a reaction of at least two raw materials of, for example, lithium sulfide ($Li_2S$), phosphorus sulfide (for example, diphosphorus pentasulfide ($P_2S_5$)), a phosphorus single body, a sulfur single body, sodium sulfide, hydrogen sulfide, lithium halides (for example, LiI, LiBr, and LiCl), or sulfides of an element represented by M (for example, $SiS_2$, SnS, and $GeS_2$).

The ratio between $Li_2S$ and $P_2S_5$ in Li-P-S-based glass and Li-P-S-based glass ceramic is preferably 60:40 to 90:10 and more preferably 68:32 to 78:22 in terms of the molar ratio between $Li_2S:P_2S_5$. In a case in which the ratio between $Li_2S$ and $P_2S_5$ is set in the above-described range, it is possible to increase the lithium ion conductivity. Specifically, the lithium ion conductivity can be preferably set to $1 \times 10^{-4}$ S/cm or more and more preferably set to $1 \times 10^{-3}$ S/cm or more. The upper limit is not particularly limited, but realistically $1 \times 10^{-1}$ S/cm or less.

As specific examples of the sulfide-based inorganic solid electrolytes, combination examples of raw materials will be described below. Examples thereof include $Li_2S$-$P_2S_5$, $Li_2S$-$P_2S_5$-LiCl, $Li_2S$-$P_2S_5$-$H_2S$, $Li_2S$-$P_2S_5$-$H_2S$-LiCl, $Li_2S$-LiI-$P_2S_5$, $Li_2S$-LiI-$Li_2O$-$P_2S_5$, $Li_2S$-LiBr-$P_2S_5$, $Li_2S$-$Li_2O$-$P_2S_5$, $Li_2S$-$Li_3PO_4$-$P_2S_5$, $Li_2S$-$P_2S_5$-$P_2O_5$, $Li_2S$-$P_2S_5$-$SiS_2$, $Li_2S$-$P_2S_5$-$SiS_2$-LiCl, $Li_2S$-$P_2S_5$-SnS, $Li_2S$-$P_2S_5$-$Al_2S_3$, $Li_2S$-$GeS_2$, $Li_2S$-$GeS_2$-ZnS, $Li_2S$-$Ga_2S_3$, $Li_2S$-$GeS_2$-$Ga_2S_3$, $Li_2S$-$GeS_2$-$P_2S_5$, $Li_2S$-$GeS_2$-$Sb_2S_5$, $Li_2S$-$GeS_2$-$Al_2S_3$, $Li_2S$-$SiS_2$, $Li_2S$-$Al_2S_3$, $Li_2S$-$SiS_2$-$Al_2S_3$, $Li_2S$-$SiS_2$-$P_2S_5$, $Li_2S$-$SiS_2$-$P_2S_5$-LiI, $Li_2S$-$SiS_2$-LiI, $Li_2S$-$SiS_2$-$Li_4SiO_4$, $Li_2S$-$SiS_2$-$Li_3PO_4$, $Li_{10}GeP_2S_{12}$, and the like. Mixing ratios of the respective raw materials do not matter. Examples of a method for synthesizing sulfide-based inorganic solid electrolyte materials using the above-described raw material compositions include an amorphization method. Examples of the amorphorization method include a mechanical milling method, a solution method, and a melting quenching method. This is because treatments at normal temperature become possible, and it is possible to simplify manufacturing steps.

(ii) Oxide-based inorganic solid electrolytes

Oxide-based inorganic solid electrolytes are preferably compounds which contain oxygen atoms (O), have an ion conductivity of metals belonging to Group I or II of the periodic table, and have electron-insulating properties.

Specific examples of the compounds include $Li_{xa}La_{ya}TiO_3$ [xa=0.3 to 0.7 and ya=0.3 to 0.7] (LLT), $Li_{xb}La_{yb}Zr_{zb}M^{bb}_{mb}O_{nb}$ ($M^{bb}$ is at least one element of Al, Mg, Ca, Sr, V, Nb, Ta, Ti, Ge, In or Sn, xb satisfies $5 \leq xb \leq 10$, yb satisfies $1 \leq yb \leq 4$, zb satisfies $1 \leq zb \leq 4$, mb satisfies $0 \leq mb \leq 2$, and nb satisfies $5 \leq nb \leq 20$.), $Li_{xc}B_{yc}M^{cc}_{zc}O_{nc}$ ($M^{cc}$ is at least one element of C, S, Al, Si, Ga, Ge, In, or Sn, xc satisfies $0 \leq xc \leq 5$, yc satisfies $0 \leq yc \leq 1$, zc satisfies $0 \leq zc \leq 1$, and nc satisfies $0 \leq nc \leq 6$), $Li_{xd}(Al, Ga)_{yd}(Ti, Ge)_{zd}Si_{ad}P_{md}O_{nd}$ ($1 \leq xd \leq 3$, $0 \leq yd \leq 1$, $0 \leq zd \leq 2$, $0 \leq ad \leq 1$, $1 \leq md \leq 7$, $3 \leq nd \leq 13$), $Li_{(3-2xe)}M^{ee}_{xe}D^{ee}O$ (xe represents a number of 0 or more and 0.1 or less, and $M^{ee}$ represents a divalent metal atom. $D^{ee}$ represents a halogen atom or a combination of two or more halogen atoms.), $Li_{xf}Si_{yf}O_{zf}$ ($1 \leq xf \leq 5$, $0 \leq yf \leq 3$, $1 \leq zf \leq 10$), $Li_{xg}S_{yg}O_{zg}$ ($1 \leq xg \leq 3$, $0 < yg \leq 2$, $1 \leq zg \leq 10$), $Li_3BO_3$-$Li_2SO_4$, $Li_2O$-$B_2O_3$-$P_2O_5$, $Li_2O$-$SiO_2$, $Li_6BaLa_2Ta_2O_{12}$, $Li_3PO_{(4-3/2w)}N_w$ (w satisfies $w<1$), $Li_{3.5}Zn_{0.25}GeO_4$ having a lithium super ionic conductor (LISICON)-type crystal structure, $La_{0.55}Li_{0.35}TiO_3$ having a perovskite-type crystal structure, $LiTi_2P_3O_{12}$ having a natrium super ionic conductor (NASICON)-type crystal structure, $Li_{1+xh+yh}(Al, Ga)_{xh}(Ti, Ge)_{2-xh}Si_{yh}P_{3-yh}O_{12}$ ($0 \leq xh \leq 1$, $0 \leq yh \leq 1$), $Li_7La_3Zr_2O_{12}$ (LLZ) having a garnet-type crystal structure. In addition, phosphorus compounds containing Li, P and O are also desirable. Examples thereof include lithium phosphate ($Li_3PO_4$), LiPON in which some of oxygen atoms in lithium phosphate are substituted with nitrogen, $LiPOD^1$ ($D^1$ is at least one element selected from Ti, V, Cr, Mn, Fe, Co, Ni, Cu, Zr, Nb, Mo, Ru, Ag, Ta, W, Pt, Au, or the like), and the like. It is also possible to preferably use $LiA^1ON$ ($A^1$ represents at least one element selected from Si, B, Ge, Al, C, Ga, or the like) and the like.

The shape of the inorganic solid electrolyte before being added to the solid electrolyte composition is not particularly limited, but is preferably a particle shape. The volume-average particle diameter of the inorganic solid electrolyte before being added to the solid electrolyte composition is not particularly limited, but is preferably 0.01 $\mu$m or more and more preferably 0.1 $\mu$m or more. The upper limit is preferably 100 $\mu$m or less and more preferably 50 $\mu$m or less.

Meanwhile, the volume-average particle diameter of the inorganic solid electrolyte particles being added to the solid electrolyte composition can be computed using a method described in the following section of examples.

The shape of the inorganic solid electrolyte in the solid electrolyte composition is not particularly limited, but is preferably a particle shape.

The volume-average particle diameter of the inorganic solid electrolyte in the solid electrolyte composition is not particularly limited, but is preferably small. This is because, in the all-solid state secondary battery, as the volume-average particle diameter of the inorganic solid electrolyte decreases, the surface contact area between the inorganic solid electrolyte and the active material increases, and consequently, it is easier for lithium ions to migrate in the respective layers constituting the all-solid state secondary battery and between the respective layers. The lower limit of the volume-average particle diameter of the inorganic solid electrolyte is practically 0.1 $\mu$m or more. On the other hand, in a case in which the surface contact area between the inorganic solid electrolyte and the active material is taken into account, the upper limit of the volume-average particle diameter of the inorganic solid electrolyte is preferably 10 $\mu$m or less, more preferably 5 $\mu$m or less, and particularly preferably 2 $\mu$m or less.

Meanwhile, the volume-average particle diameter of the inorganic solid electrolyte in the solid electrolyte composition can be computed using a method described in the section of examples described below.

In a case in which a decrease in the interface resistance and the maintenance of the decreased interface resistance in the case of being used in the all-solid state secondary battery are taken into account, the content of the inorganic solid electrolyte in the solid component of the solid electrolyte composition is preferably 5% by mass or more, more preferably 10% by mass or more, and particularly preferably 20% by mass or more with respect to 100% by mass of the solid components. From the same viewpoint, the upper limit is preferably 99.9% by mass or less, more preferably 99.5% by mass or less, and particularly preferably 99% by mass or less.

These inorganic solid electrolytes may be used singly or two or more inorganic solid electrolytes may be used in combination.

Meanwhile, the solid content in the present specification refers to a component that does not volatilize or evaporate and thus disappear in the case of being subjected to a drying treatment in a nitrogen atmosphere at 170°C for six hours. Typically, the solid content refers to a component other than a dispersion medium described below.

(Binder)

The solid electrolyte composition of the present invention contains the binder (B1).

The binder (B1) that is used in the present invention is not particularly limited as long as the binder is an organic polymer.

The binder (B1) that can be used in the present invention is not particularly limited, and, for example, binders made of a resin described below are preferred.

Examples of fluorine-containing resins include polytetrafluoroethylene (PTFE), polyvinylene difluoride (PVdF), and copolymers of polyvinylene difluoride and hexafluoropropylene (PVdF-HFP).

Examples of hydrocarbon-based thermoplastic resins include polyethylene, polypropylene, styrene butadiene rubber (SBR), hydrogenated styrene butadiene rubber (HSBR), butylene rubber, acrylonitrile butadiene rubber, polybutadiene, polyisoprene, polyisoprene latex, and the like.

Examples of acrylic resins include a variety of (meth)acrylic monomers, (meth)acrylic acid ester monomers, (meth)acrylic amide monomers, and copolymers of monomers constituting these resins (specifically, copolymers of (meth)acrylic acid and alkyl (meth)acrylate ester (preferably acrylic acid and methyl acrylate)).

In addition, copolymers with other vinyl-based monomers are also preferably used. Examples thereof include copolymers of methyl (meth)acrylate and polystyrene, copolymers of methyl (meth)acrylate and acrylonitrile, and copolymers of butyl (meth)acrylate, acrylonitrile, and styrene.

In the specification of the present application, a copolymer may be any one of a statistic copolymer, a periodic copolymer, a blocked copolymer, and a graft copolymer, and a blocked copolymer is preferred.

Examples of other resins include a polyurethane resin, a polyurea resin, a polyamide resin, a polyimide resin, a polyester resin, a polyether resin, a polycarbonate resin, a cellulose derivative resin, and the like.

These binders may be used singly or two or more binders may be used in combination.

The binder (B1) is preferably at least one selected from the group consisting of the acrylic resin, the polyurethane resin, the polyurea resin, the polyimide resin, the fluorine-containing resin, and the hydrocarbon-based thermoplastic resin in order to further enhance the bonding property between the inorganic solid electrolyte particles and between the inorganic solid electrolyte particles and the active material particles.

The binder (B1) preferably has a polar group in order to enhance wettability or the adsorption property to particle surfaces. The "polar group" is preferably a monovalent group including a hetero atom, for example, a monovalent group including a structure in which any of an oxygen atom, a nitrogen atom, and a sulfur atom and a hydrogen atom are bonded together, and specific examples thereof include a carboxy group, a hydroxy group, an amino group, a phosphoric acid group, and a sulfo group.

The solid electrolyte composition of the present invention can be preferably used as a solid electrolyte composition for forming an active material layer which is intended to produce an electrode sheet including a primer layer between an active material layer and a collector. In this electrode sheet, the active material layer contains the binder (B1), the primer layer contains the binder (B2), and the binder (B2) is insoluble in the dispersion medium (C1) described below, and is soluble in the dispersion medium (C2) described below.

Here, the dispersion medium in which the binder (B2) is "soluble" refers to a dispersion medium capable of turning 20% by mass of the binder (B2) into a homogeneous transparent solution and preferably refers to a dispersion medium capable of producing a homogeneous transparent solution under a heating and stirring condition of 60°C to 150°C within 0.5 hours. In contrast, a dispersion medium in which the binder (B2) is not "soluble" is defined as "insoluble".

Meanwhile, the transparent solution refers to a liquid in which there is no solid-liquid interface and a solid content having a uniform transparency is dispersed.

In the case of using the solid electrolyte composition of the present invention as a solid electrolyte composition for forming an active material layer, an electrode sheet to be obtained develops a high bonding property. The reason therefor is not clear, but is considered that, in a case in which the solid electrolyte composition for forming an active material layer is applied onto a primer layer and an active material layer is formed, out of the binder (B2) in the primer layer, the binder (B2) present near an interface with the active material layer is partially dissolved in the dispersion medium (C2) in the solid electrolyte composition, and thus the binder (B2) is partially eluted to the active material layer, a layer interface between the active material layer and the primer layer is disturbed and becomes an uneven shape, and, due to a so-called anchor effect, the active material layer and the primer layer are strongly bound together. The bonding property between the active material layer and the collector is considered to be improved through the primer layer due to the above-described reason.

A polymer constituting the binder (B2) has a high bonding property with a collector (or a metal foil) and thus preferably includes a rubber material and is more preferably made of a rubber material.

The rubber material is not particularly limited as long as the rubber material is insoluble in the dispersion medium (C1) and soluble in the dispersion medium (C2), and examples thereof include hydrocarbon-based rubber (butadiene rubber, styrene-butadiene rubber, acrylonitrile-butadiene rubber, or hydrogenated rubber thereof), fluorine-based rubber (polyvinylidene difluoride (PVdF), a copolymer of polyvinylidene difluoride and hexafluoropropylene (PVdF-HFP), polytetrafluoroethylene (PTFE), or the like), cellulose-based rubber, acrylic rubber (acrylic acid ester or the like), and the like.

Among these, the binder (B2) has a high bonding property with a collector (or a metal foil) and has an electrochemical stability under charging and discharging and is thus more preferably hydrocarbon-based rubber, and, specifically, preferably at least one selected from butadiene rubber, styrene-butadiene rubber, or acrylonitrile-butadiene rubber.

The binder (B2) may be used singly or two or more binders may be used in combination.

The shape of the binder is not particularly limited and may be a particle shape or an irregular shape in the solid electrolyte composition, the electrode sheet for an all-solid state secondary battery, or the all-solid state secondary battery.

The binder (B1) is preferably a particulate polymer of 0.05 to 50 μm since the formation of a resistance coating generated by the coating of the active material or the inorganic solid electrolyte with the polymer is suppressed.

The average particle diameter of the binder can be computed using a method described in the section of examples described below.

In a case in which the binder is particles, the particles may not be uniform and may have a core-shell shape or a hollow shape. In addition, an organic substance or an inorganic substance may be included in a core portion that forms the inside of the binder. Examples of the organic substance included in the core portion include a dispersion medium, a dispersant, a lithium salt, an ion liquid, a conductive auxiliary agent, and the like which will be described below.

The moisture concentration of a polymer constituting the binder that is used in the present invention is preferably 100 ppm (mass-based) or less.

In addition, the polymer constituting the binder that is used in the present invention may be used in a solid state or may be used in a state of a polymer particle dispersion liquid or a polymer solution.

The mass-average molecular weight of the polymer constituting the binder that is used in the present invention is preferably 1,000 or more, more preferably 5,000 or more, and still more preferably 10,000 or more. The upper limit is preferably 1,000,000 or less, more preferably 200,000 or less, and still more preferably 100,000 or less.

In a case in which a favorable decreasing property of the interface resistance and the maintaining property thereof in the case of being used in the all-solid state secondary battery are taken into account, the content of the binder (B1) in the solid electrolyte composition is preferably 0.01% by mass or more, more preferably 0.1% by mass or more, and still more preferably 1% by mass or more with respect to 100% by mass of the solid components. From the viewpoint of battery characteristics, the upper limit is preferably 10% by mass or less, more preferably 5% by mass or less, and still more preferably 3% by mass or less.

In the present invention, the mass ratio of the total mass (total amount) of the inorganic solid electrolyte and the active material to the mass of the binder (B1) [(the mass of the inorganic solid electrolyte+the mass of the active material)/the mass of the binder (B1)] is preferably in a range of 1,000 to 1. Furthermore, this ratio is more preferably 500 to 2 and still more preferably 150 to 10.

(Dispersion medium (C))

The solid electrolyte composition of the present invention contains the dispersion medium (C), and the dispersion medium (C) contains at least one dispersion medium (C1) below and at least one dispersion medium (C2) below at a mass ratio (dispersion medium (C1)/dispersion medium (C2)) of 20/80 to 99/1.

Dispersion medium (C1): a saturated aliphatic compound or alicyclic compound having a boiling point of 80°C or higher and lower than 200°C

Dispersion medium (C2): an aromatic compound having a boiling point of 100°C or higher and lower than 220°C

Here, the dispersion medium (C1) and the dispersion medium (C2) may include a halogen atom in the compound. The dispersion medium (C1) and the dispersion medium (C2) preferably do not include any hetero atom except for the halogen atom, and, regarding atoms constituting the dispersion medium (C1) and the dispersion medium (C2), each of the dispersion media is independently preferably composed of only a carbon atom and a hydrogen atom or preferably composed of only a carbon atom, a hydrogen atom, and a halogen atom and more preferably composed of only a carbon atom and a hydrogen atom from the viewpoint of stability to the inorganic solid electrolyte.

The halogen atom is a fluorine atom, a chlorine atom, a bromine atom, or an iodine atom, and a chlorine atom is preferred.

In the present specification, the boiling point refers to a boiling point at normal pressure (760 mmHg).

The reason is not clear, but it is considered that the inorganic solid electrolyte has a higher affinity to the dispersion medium (C2) than the dispersion medium (C1), and the miniaturization of the inorganic solid electrolyte progresses by the dissolution of some of the surface of the inorganic solid electrolyte. In addition, in the case of setting the above-described specific content ratio, it becomes possible to suppress the dissolution of the inorganic solid electrolyte and miniaturize the inorganic solid electrolyte, and a decrease in the ion conductivity caused by the miniaturization can be suppressed. Therefore, the solid electrolyte composition of the present invention has a favorable ion conductivity and is capable of having a fine inorganic solid electrolyte. In addition, in the case of using the primer layer, an effect of mixing the dispersion medium (C1) and the dispersion medium (C2) develops more significantly. The binder (B2) contained in the primer layer dissolves in the dispersion medium (C2), and thus some of the surface of the primer layer is eluted and mixed with the active material layer. Therefore, in an electrode sheet for an all-solid state secondary battery and an all-solid state secondary battery that are produced using the solid electrolyte composition of the present invention, both the bonding property and the ion conductivity become favorable.

(i) Dispersion medium (C1)

The saturated aliphatic compound having a boiling point of 80°C or higher and lower than 200°C may be linear or branched and may or may not have a substituent. Examples of the substituent include substituents P described below. Among these substituents P, a halogen atom is preferred. Particularly, the saturated aliphatic compound is preferably not substituted.

Specific examples thereof include saturated aliphatic compounds such as heptane (98°C), octane (125°C), isooctane (99°C), nonane (151°C), decane (174°C), and undecane (196°C) and saturated aliphatic compounds including a halogen atom such as 2-chloro-2-methyl butane (86°C), 1-chloropentane (108°C), 1-chloro-3-methylbutane (100°C), 1,2-dichloropropane (97°C), 1,3-dichloropropane (122°C), 2,2-dichlorobutane (104°C), 1,2-dichlorobutane (124°C), 1,4-dichlorobutane (153°C), 1-chlorohexane (135°C), 1-chloroheptane (159°C), 1-bromobutane (101°C), 1-iodopropane (103°C), and 1-iodobutane (130°C). The temperatures in parentheses indicate boiling points.

The alicyclic compound having a boiling point of 80°C or higher and lower than 200°C may be monocyclic or polycyclic and may or may not have a substituent. In addition, the alicyclic compound may be a saturated alicyclic compound not having any unsaturated bond or an unsaturated alicyclic compound having an unsaturated bond. Examples of the substituent include the substituents P described below. Among these substituents P, at least one selected from an alkenyl group, an alkyl group, a cycloalkyl group, or a halogen atom is preferred, at least one selected from an alkyl group, a cycloalkyl group, or a halogen atom is more preferred, and an alkyl group or a cycloalkyl group is still more preferred.

The alkyl group and the cycloalkyl group preferably have a branched structure, and an isopropyl group, an isobutyl group, a sec-butyl group, a t-butyl group, an isoamyl group, a sec-amyl group, a t-amyl group, and the like are more preferred.

Specific examples thereof include saturated alicyclic compounds such as cyclohexane (80°C), ethylcyclopentane (103°C), methylcyclohexane (101°C), 1,3,5-triethylcyclohexane (140°C), ethylcyclohexane (131°C), propylcyclohexane (155°C), isopropylcyclohexane (155°C), isobutylcyclohexane (169°C), isopropyl-4-methylcyclohexane (171°C), t-butylcyclohexane (167°C), butylcyclohexane (180°C), cycloheptane (118°C), cyclooctane (149°C), cyclononane, cyclodecane, cycloundecane (192°C), cyclododecane, norbornane (106°C), decalin (decahydronaphthalene, 186°C), spiroundecane (198°C), and spirodecane (152°C), saturated alicyclic compounds having a halogen atom such as fluorocyclohexane (103°C) and chlorocyclohexane (142°C), and unsaturated alicyclic compounds such as cyclooctene (145°C), cyclooctadiene (151°C), vinylcyclohexene (126°C), norbornene (96°C), and norbornadiene (89°C). The temperatures in parentheses indicate boiling points.

The boiling point of the dispersion medium (C1) is preferably 100°C or higher and lower than 200°C and more preferably 120°C or higher and lower than 160°C since the coating manufacturing aptitude is excellent, and the decomposition of the inorganic solid electrolyte is suppressed.

Among these, the dispersion medium (C1) is preferably an alicyclic compound and more preferably a saturated alicyclic compound since the dispersion medium has an excellent coating viscosity and is excellent in terms of the coating manufacturing aptitude.

(ii) Dispersion medium (C2)

The aromatic compound (C2) having a boiling point of 100°C or higher and lower than 220°C may have an aromatic ring (a benzene ring or a naphthalene ring is preferred, and a benzene ring is more preferred) in the molecule and may or may not have a substituent. Examples of the substituent include the substituents P described below. Among these substituents P, at least one selected from an alkyl group, an alkenyl group, an alkynyl group, a cycloalkyl group, an aryl group, an aralkyl group, or a halogen atom is preferred, at least one selected from an alkyl group, a cycloalkyl group, an alkenyl group, or a halogen atom is more preferred, at least one selected from an alkyl group, a cycloalkyl group, or a halogen atom is still more preferred, and an alkyl group or a cycloalkyl group is particularly preferred.

As preferred groups of the alkyl group and the cycloalkyl group, the preferred groups of the alkyl group and the cycloalkyl group in the dispersion medium (C1) are exemplified.

Specific examples thereof include aromatic compounds such as toluene (111°C), xylene (isomer mixture, 144°C), o-xylene (144°C), m-xylene (139°C), p-xylene (138°C), mesitylene (1,3,5-trimethylbenzene, 164°C), pseudocumene (1,2,4-trimethylbenzene, 169°C), hemimellitene (1,2,3-trimethylbenzene, 176°C), 1,3,5-triethylbenzene (218°C), durene (1,2,4,5-tetramethylbenzene, 197°C), isoprene (1,2,3,5-tetramethylbenzene, 198°C), ethylbenzene (136°C), propylbenzene (159°C), p-ethyltoluene (161°C), m-ethyltoluene (160°C), o-ethyltoluene (166°C), p-diethylbenzene (184°C), m-diethylbenzene (182°C), o-diethylbenzene (180°C), cumene (isopropylbenzene, 155°C), p-cymene (p-isopropyltoluene, 176°C), m-cymene (m-isopropyltoluene, 175°C), o-cymene (o-isopropyltoluene, 178°C), p-diisopropylbenzene (210°C), m-diisopropylbenzene (203°C), o-diisopropylbenzene (205°C), t-butylbenzene (168°C), p-t-butyltoluene (193°C), m-t-butyltoluene (189°C), o-t-butyltoluene (200°C), p-t-butyl ethylbenzene (210°C), m-t-butyl ethylbenzene (205°C), o-t-butyl ethylbenzene, t-amylbenzene (191°C), sec butylbenzene (173°C), hexamethylbenzene (165°C), naphthalene (218°C), 5-t-butyl-m-xylene (202°C), 5-ethyl-m-xylene (184°C), 5-isopropyl-m-xylene (195°C), indane (179°C), tetrahydronaphthalene (207°C), styrene (145°C), and ethynylbenzene (142°C) and aromatic compounds including a halogen atom such as chlorobenzene (132°C), bromobenzene (156°C), iodobenzene (188°C), o-dichlorobenzene (182°C), m-dichlorobenzene (172°C), and p-dichlorobenzene (174°C). The temperatures in parentheses indicate boiling points.

The boiling point of the dispersion medium (C2) is preferably 120°C or higher and lower than 200°C and more preferably 140°C or higher and lower than 180°C since the coating manufacturing aptitude is excellent, the decomposition of the inorganic solid electrolyte is suppressed, and the binder (B2) can be partially dissolved during application.

The content ratio ((C1)/(C2)) between the dispersion medium (C1) and the dispersion medium (C2) is 20/80 to 99/1, preferably 50/50 to 97/3, more preferably 60/40 to 95/5, and most preferably 80/20 to 90/10 in terms of mass ratio.

In a case in which the content ratio is in the above-described range, the miniaturization of the inorganic solid electrolyte progresses, and a sufficient bonding property is obtained.

In the case of using the primer layer, an excessively large content of the dispersion medium (C2) completely mixes the primer layer and the active material layer and increases the resistance. On the other hand, an excessively small content of (C2) causes an insufficient elution of the binder (B2), disables the obtaining of a sufficient anchor effect, and disables the obtaining of a sufficient bonding property.

During the coating and drying of the solid electrolyte composition, the concentration of the dispersion medium (C2) in the dispersion medium (C) increases, and thus the binder (B2) can be partially dissolved, and thus the boiling point $TC_2$ of the dispersion medium (C2) is preferably equal to or higher than the boiling point $TC_1$ of the dispersion medium (C1).

Specifically, $(TC_2-TC_1)$ that is the difference between the boiling point $TC_1$ and the boiling point $TC_2$ is preferably 0°C or more, more preferably 5°C or more, and most preferably 10°C or more. The upper limit is preferably 50°C or less, more preferably 30°C or less, and most preferably 20°C or less.

In a case in which the difference of the boiling point is in the above-described range, the partial dissolution of the binder (B2) is likely to occur, and the bonding property is easily improved.

The dispersion medium (C) may also contain a dispersion medium other than the dispersion medium (C1) and the dispersion medium (C2) as long as the effect of the present invention is exhibited.

The total content of the dispersion medium (C1) and the dispersion medium (C2) in the dispersion medium (C) is preferably 80% by mass or more, more preferably 90% by mass or more, and most preferably 100% by mass.

Specific examples of the other dispersion medium include an alcohol solvent (methanol, ethanol, butanol, pentanol, or hexanol), an ether solvent (dibutyl ether, tetraethylene glycol dimethyl ether (tetraglyme), triethylene glycol dimethyl ether (triglyme), tetraethylene glycol monomethyl ether, triethylene glycol monomethyl ether, tetraethylene glycol, or triethylene glycol), an ester solvent (butyl butyrate or γ-butyrolactone), a carbonate solvent (ethylene carbonate, dimethyl carbonate, or diethyl carbonate), an amide solvent, an amino solvent, a ketone solvent (methyl ethyl ketone or the like), an aromatic compound solvent except for the dispersion medium (C2), an aliphatic compound solvent except for the dispersion medium (C1), a nitrile solvent (acetonitrile or the like), and the like.

The boiling point of the other dispersion medium is preferably 50°C or higher and more preferably 70°C or higher. The upper limit is preferably 250°C or lower and more preferably 220°C or lower. The dispersion medium may be used singly or two or more dispersion media may be used in combination.

The dispersion medium (C) is included in the solid electrolyte composition, but is preferably removed in a process of manufacturing a solid electrolyte-containing sheet or an all-solid state secondary battery and thus does not remain in the solid electrolyte-containing sheet or the all-solid state secondary battery. Regarding the permissible amount of the dispersion medium (C) that remains in the solid electrolyte-containing sheet or the all-solid state battery, the upper limit is 5% or less, more preferably 1% or less, still more preferably 0.1% or less, and most preferably 0.05% or less. The lower limit is not particularly limited, but is realistically 1 ppb or more.

In the present specification, compounds or groups that are not clearly expressed as substituted or unsubstituted may have an appropriate substituent in the compounds or groups. What has been described above shall also apply to compounds that are not clearly expressed as substituted or unsubstituted. Preferred examples of the substituent include the substituents P described below.

Examples of the substituents P include the following substituents:
an alkyl group (preferably an alkyl group having 1 to 20 carbon atoms, for example, methyl, ethyl, isopropyl, t-butyl, isobutyl, pentyl, heptyl, 1-ethylpentyl, benzyl, 2-ethoxyethyl, 1-carboxymethyl, or the like), an alkenyl group (preferably an alkenyl group having 2 to 20 carbon atoms, for example, vinyl, allyl, oleyl, or the like), an alkynyl group (preferably an alkynyl group having 2 to 20 carbon atoms, for example, ethynyl, butadiynyl, phenylethynyl, or the like), a cycloalkyl group (preferably a cycloalkyl group having 3 to 20 carbon atoms, for example, cyclopropyl, cyclopentyl, cyclohexyl, 4-methylcyclohexyl, or the like; here, in the case of being referred to as an alkyl group in the present specification, generally, a cycloalkyl group is also referred to), an aryl group (preferably an aryl group having 6 to 26 carbon atoms, for example, phenyl, 1-naphthyl, 4-methoxyphenyl, 2-chlorophenyl, 3-methylphenyl, or the like), an aralkyl group (preferably an aralkyl group having 2 to 20 carbon atoms, for example, benzyl, phenethyl, or the like), a heterocyclic group (preferably a heterocyclic group having 7 to 23 carbon atoms, preferably a 5- or 6-membered heterocyclic group having at least one selected from an oxygen atom, a sulfur atom, or a nitrogen atom as a ring-constituting atom, for example, tetrahydropyranyl, tetrahydrofuranyl, 2-pyridyl, 4-pyridyl, 2-imidazolyl, 2-benzimidazolyl, 2-thiazolyl, 2-oxazolyl, pyrrolidone group, or the like), an alkoxy group (preferably an alkoxy group having 1 to 20 carbon atoms, for example, methoxy, ethoxy, isopropyloxy, benzyloxy, or the like), an aryloxy group (preferably an aryloxy group having 6 to 26 carbon atoms, for example, phenoxy, 1-naphthyloxy, 3-methylphenoxy, 4-methoxyphenoxy, or the like; here, in the case of being referred to as an alkoxy group in the present specification, generally, an aryloyl group is also referred to), an alkoxycarbonyl group (preferably an alkoxycarbonyl group having 2 to 20 carbon atoms, for example, ethoxycarbonyl, 2-ethylhexyloxycarbonyl, or the like), an aryloxycarbonyl group (preferably an aryloxycarbonyl group having 6 to 26 carbon atoms, for example, phenoxycarbonyl, 1-naphthyloxycarbonyl, 3-methylphenoxycarbonyl, 4-methoxyphenoxycarbonyl, or the like), an amino group (preferably an amino group, alkylamino group, or arylamino group having 0 to 20 carbon atoms, for example, amino, N,N-dimethylamino, N,N-diethylamino, N-ethylamino, anilino, or the like), a sulfamoyl group (preferably a sulfamoyl group having 0 to 20 carbon atoms, for example, N,N-dimethylsulfamoyl, N-phenylsulfamoyl, or the like), an acyl group (preferably an acyl group having 1 to 20 carbon atoms, for example, acetyl, propionyl, butyryl, or the like), an aryloyl group (preferably an aryloyl group having 7 to 23 carbon atoms, for example, benzoyl or the like; here, in the case of being referred to as an acyl group in the present specification, generally, an aryloyl group is also referred to), an acyloxy group (preferably an acyloxy group having 1 to 20 carbon atoms, for example, acetyloxy, or the like), an aryloyloxy group (preferably an aryloyloxy group having 7 to 23 carbon atoms, for example, benzoyloxy, or the like; here, in the case of being referred to as an acyloxy group in the present specification, generally, an aryloyloxy group is also referred to), a carbamoyl group (preferably a carbamoyl group having 1 to 20 carbon atoms, for example, N,N-dimethylcarbamoyl, N-phenylcarbamoyl, or the like), an acylamino group (preferably an acylamino group having 1 to 20 carbon atoms, for example, acetylamino, benzoylamino, or the like), an alkylsulfanyl group (for example, an alkylsulfanyl group having 1 to 20 carbon atoms, for example, methylsulfanyl, ethylsulfanyl, isopropylsulfanyl, benzylsulfanyl, or the like), an arylsulfanyl group (preferably an arylsulfanyl group having 6 to 26 carbon atoms, for example, phenylsulfanyl, 1-naphthylsulfanyl, 3-methylphenylsulfanyl, 4-methoxyphenylsulfanyl, or the like), an alkylsulfonyl group (preferably an alkylsulfonyl group having 1 to 20 carbon atoms, for example, methylsulfonyl, ethylsulfonyl, or the like), an arylsulfonyl group (preferably an arylsulfonyl group having 6 to 22 carbon atoms, for example, benzenesulfonyl or the like), an alkylsilyl group (preferably an alkylsilyl group having 1 to 20 carbon atoms, for example, monomethylsilyl, dimethylsilyl, trimethylsilyl, triethylsilyl, or the like), an arylsilyl group (preferably an arylsilyl group having 6 to 42 carbon atoms, for example, triphenylsilyl, or the like), an alkoxysilyl group (preferably an alkoxysilyl group having 1 to 20 carbon atoms, for example, monomethoxysilyl, dimethoxysilyl, trimethoxysilyl, triethoxysilyl, or the like), an aryloxysilyl group (preferably an aryloxysilyl group having 6 to 42 carbon atoms, for example, triphenyloxysilyl, or the like), a phosphoyl group (preferably a phosphoryl group having 0 to 20 carbon atoms, for example, $-OP(=O)(R^P)_2$), a phosphonyl group (preferably a phosphonyl group having 0 to 20 carbon atoms, for example, $-P(=O)(R^P)_2$), a phosphinyl group (preferably a phosphinyl group having 0 to 20 carbon atoms, for example, $-P(R^P)_2$), a (meth)acryloyl group, a (meth)acryloyloxy group, a (meth)acryloylimino group (a (meth)acrylamide group), a hydroxyl group, a sulfanyl group, a carboxyl group, a phosphoric acid group, a phosphoric acid group, a sulfonic acid group, a cyano group, and a halogen atom (for example, a fluorine atom, a chlorine atom, a bromine atom, an iodine atom, or the like).

In addition, in the respective groups exemplified as the substituents P, the substituents P may be further substituted.

In a case in which a compound, a substituent, a linking group, and the like has an alkyl group, an alkylene group, an alkenyl group, an alkenylene group, an alkynyl group, an alkynylene group, and/or the like, the compound, the substituent, the linking group, and the like may have a cyclic shape or a chain shape, may be linear or branched, and may be substituted or unsubstituted as described above.


(Dispersant)

The solid electrolyte composition of the present invention may contain a dispersant. The addition of the dispersant enables the suppression of the agglomeration of the electrode active material and the inorganic solid electrolyte even in a case in which the concentration of any of the electrode active material and the inorganic solid electrolyte is high or a case in which the particle diameters are small and the surface area increases and the formation of a uniform active material layer and a uniform solid electrolyte layer. As the dispersant, a dispersant that is generally used for an all-solid state secondary battery can be appropriately selected and used. Generally, a compound intended for particle adsorption and steric repulsion and/or electrostatic repulsion is preferably used.

(Lithium salt)

The solid electrolyte composition of the present invention may contain a lithium salt.

The lithium salt is not particularly limited; however, for example, lithium salts described in Paragraphs 0082 to 0085 of JP2015-088486A are preferred.

The content of the lithium salt is preferably 0 parts by mass or more and more preferably 5 parts by mass or more with respect to 100 parts by mass of the inorganic solid electrolyte. The upper limit is preferably 50 parts by mass or less and more preferably 20 parts by mass or less.

(Ionic liquid)

The solid electrolyte composition of the present invention may also contain an ion liquid in order to further improve the ion conductivity. The ion liquid is not particularly limited, but an ion liquid dissolving the above-described lithium salt is preferred. Examples thereof include compounds made of a combination of a cation and an anion described below.

(i) Cation

Examples of the cation include an imidazolium cation, a pyridinium cation, a piperidinium cation, a pyrrolidinium cation, a morpholinium cation, a phosphonium cation, a quaternary ammonium cation, and the like. Here, these cations have the following substituent.

As the cation, these cations may be used singly or two or more cations may be used in combination.

As the cation, a quaternary ammonium cation, an imidazolium cation, a piperidinium cation, or a pyrrolidinium cation is preferred, and a quaternary ammonium cation, a piperidinium cation, or a pyrrolidinium cation is more preferred.

Examples of the substituent that the cations have include an alkyl group (the number of carbon atoms is preferably 1 to 8 and more preferably 1 to 4), a hydroxyalkyl group (the number of carbon atoms is preferably 1 to 3), an alkyloxyalkyl group (the number of carbon atoms is preferably 2 to 8 and more preferably 2 to 4), a group having an ether bond (a group having at least one ether bond in the carbon chain of the alkyl group), an allyl group, an aminoalkyl group (the number of carbon atoms is 1 to 8 and more preferably 1 to 4), and an aryl group (the number of carbon atoms is preferably 6 to 12 and more preferably 6 to 8). The substituent may form a cyclic structure in a form of containing a cation site. The substituents may also have the above-described substituent P.

(ii) Anion

Examples of the anion include a chloride ion, a bromide ion, an iodide ion, a boron tetrafluoride ion, a nitric acid ion, a dicyanamide ion, an acetate ion, an iron tetrachloride ion, a bis(trifluoromethanesulfonyl)imide ion, a bis(fluorosulfonyl)imide ion, a bis(perfluorobutylmethanesulfonyl)imide ion, an allylsulfonate ion, a hexafluorophosphate ion, a trifluoromethanesulfonate ion, and the like.

As the anion, these anions may be used singly or two or more anions may also be used in combination.

A boron tetrafluoride ion, a bis(trifluoromethanesulfonyl)imide ion, a bis(fluorosulfonyl)imide ion, a hexafluorophosphate ion, a dicyanamide ion, or an allylsulfonate ion is preferred, and a bis(trifluoromethanesulfonyl)imide ion, a bis(fluorosulfonyl)imide ion, or an allylsulfonate ion is more preferred.

Examples of the ion liquid include 1-allyl-3-ethylimidazolium bromide, 1-ethyl-3-methylimidazolium bromide, 1-(2-hydroxyethyl)-3-methylimidazolium bromide, 1-(2-methoxyethyl)-3-methylimidazolium bromide, 1-octyl-3-methylimidazolium chloride, N,N-diethyl-N-methyl-N-(2-methoxyethyl)ammonium tetrafluoroborate, 1-ethyl-3-methylimidazolium bis(trifluoromethanesulfonyl)imide (EMImTFSI), 1-ethyl-3-methylimidazolium bis(fluorosulfonyl)imide, 1-ethyl-3-methylimidazolium dicyanamide, 1-butyl-1-methylpyrrolidinium bis(trifluoromethanesulfonyl)imide, trimethylbutylammonium bis(trifluoromethanesulfonyl)imide (TMBATFSI), N,N-diethyl-N-methyl-N-(2-methoxyethyl) ammonium bis(trifluoromethanesulfonyl)imide, N-(2-methoxyethyl)-N-methylpyrrolidinium tetrafluoroborate, 1-butyl-1-methylpyrrolidinium bis(fluorosulfonyl)imide, (2-acryloylethyl) trimethylammonium bis(trifluoromethanesulfonyl)imide, 1-ethyl-1-methylpyrrolidinium allyl sulfonate, 1-ethyl-3-methylimidazolium allylsulfonate, trihexyltetradecylphosphonium chloride, and the like.

The content of the ion liquid is preferably 0 parts by mass, more preferably 1 parts by mass or more, and most preferably 2 part by mass or more with respect to 100 parts by mass of the inorganic solid electrolyte. The upper limit is preferably 50 parts by mass or less and more preferably 20 parts by mass or less.

The mass ratio (lithium salt:ion liquid) between the lithium salt and the ion liquid is preferably 1:20 to 20:1, more preferably 1:10 to 10:1, and most preferably 1:5 to 2:1.

(Conductive auxiliary agent)

The solid electrolyte composition of the present invention may also contain a conductive auxiliary agent. The conductive auxiliary agent is not particularly limited, and conductive auxiliary agents that are known as ordinary conductive auxiliary agents can be used. The conductive auxiliary agent may be, for example, graphite such as natural graphite or artificial graphite, carbon black such as acetylene black, Ketjen black, or furnace black, irregular carbon such as needle cokes, a carbon fiber such as a vapor-grown carbon fiber or a carbon nanotube, or a carbonaceous material such as graphene or fullerene which are electron-conductive materials and also may be metal powder or a metal fiber of copper, nickel, or the like, and a conductive polymer such as polyaniline, polypyrrole, polythiophene, polyacetylene, or a polyphenylene derivative may also be used. In addition, these conductive auxiliary agents may be used singly or two or more conductive auxiliary agents may be used.

The content of the conductive auxiliary agent is preferably 0 parts by mass or more, more preferably 0.5 parts by mass or more, and most preferably 1 part by mass or more with respect to 100 parts by mass of the inorganic solid electrolyte. The upper limit is preferably 50 parts by mass or less and more preferably 20 parts by mass or less.

(Active materials)

The solid electrolyte composition of the present invention may also contain active materials capable of intercalating and deintercalating ions of metal elements belonging to Group I or II of the periodic table. Examples of the active materials include positive electrode active materials and negative electrode active materials, and transition metal oxides that are positive electrode active materials or metal oxides that are negative electrode active materials are preferred.

In the present invention, the solid electrolyte composition containing the active material (a positive electrode active material or a negative electrode active material) will be referred to as a composition for an active material layer (a composition for a positive electrode layer or a composition for a negative electrode layer).

- Positive electrode active material -

A positive electrode active material that the solid electrolyte composition of the present invention may contain is preferably a positive electrode active material capable of reversibly intercalating and deintercalating lithium ions. The above-described material is not particularly limited as long as the material has the above-described characteristics and may be transition metal oxides, organic substances, elements capable of being complexed with Li such as sulfur, complexes of sulfur and metal, or the like.

Among these, as the positive electrode active material, transition metal oxides are preferably used, and transition metal oxides having a transition metal element $M^a$ (one or more elements selected from Co, Ni, Fe, Mn, Cu, and V) are more preferred. In addition, an element $M^b$ (an element of Group I (Ia) of the metal periodic table other than lithium, an element of Group II (IIa), or an element such as Al, Ga, In, Ge, Sn, Pb, Sb, Bi, Si, P, or B) may be mixed into this transition metal oxide. The amount of the element mixed is preferably 0 to 30 mol% of the amount (100 mol%) of the transition metal element $M^a$. The positive electrode active material is more preferably synthesized by mixing the element into the transition metal oxide so that the molar ratio of Li/$M^a$ reaches 0.3 to 2.2.

Specific examples of the transition metal oxides include transition metal oxides having a bedded salt-type structure (MA), transition metal oxides having a spinel-type structure (MB), lithium-containing transition metal phosphoric acid compounds (MC), lithium-containing transition metal halogenated phosphoric acid compounds (MD), lithium-containing transition metal silicate compounds (ME), and the like.

Specific examples of the transition metal oxides having a bedded salt-type structure (MA) include $LiCoO_2$ (lithium cobalt oxide [LCO]), $LNi_2O_2$ (lithium nickelate), $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium manganese nickelate).

Specific examples of the transition metal oxides having a spinel-type structure (MB) include lithium manganese oxide ($LiMn_2O_4$, LMO), $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compounds (MC) include olivine-type iron phosphate salts such as $LiFePO_4$ and $Li_3Fe_2(PO_4)_3$, iron pyrophosphates such as $LiFeP_2O_7$, and cobalt phosphates such as $LiCoPO_4$, and monoclinic nasicon-type vanadium phosphate salt such as $Li_3V_2(PO_4)_3$ (lithium vanadium phosphate).

Examples of the lithium-containing transition metal halogenated phosphoric acid compounds (MD) include iron fluorophosphates such as $Li_2FePO_4F$, manganese fluorophosphates such as $Li_2MnPO_4F$, cobalt fluorophosphates such as $Li_2CoPO_4F$.

Examples of the lithium-containing transition metal silicate compounds (ME) include $Li_2FeSiO_4$, $Li_2MnSiO_4$, $Li_2CoSiO_4$, and the like.

In the present invention, the transition metal oxides having a bedded salt-type structure (MA) is preferred, and LCO, LMO, NCA, or NMC is more preferred.

The shape of the positive electrode active material is not particularly limited, but is preferably a particle shape. The volume-average particle diameter (circle-equivalent average particle diameter) of positive electrode active material particles is not particularly limited. For example, the volume-average particle diameter can be set to 0.1 to 50 $\mu$m. In order to provide a predetermined particle diameter to the positive electrode active material, an ordinary crusher or classifier may be used. Positive electrode active materials obtained using a firing method may be used after being washed with water, an acidic aqueous solution, an alkaline aqueous solution, or an organic solvent. The volume-average particle diameter (circle-equivalent average particle diameter) of positive electrode active material particles can be measured using a laser diffraction/scattering-type particle size distribution measurement instrument LA-920 (trade name, manufactured by Horiba Ltd.).

The positive electrode active material may be used singly or two or more positive electrode active materials may be used in combination.

In the case of forming a positive electrode active material layer, the mass (mg) of the positive electrode active material per unit area ($cm^2$) of the positive electrode active material layer (weight per unit area) is not particularly limited and can be appropriately determined depending on the set battery capacity.

The content of the positive electrode active material in the solid electrolyte composition is not particularly limited, but is preferably 10% to 95% by mass, more preferably 30% to 90% by mass, still more preferably 50% to 85% by mass, and particularly preferably 55% to 80% by mass with respect to a solid content of 100% by mass.

- Negative electrode active material -

A negative electrode active material that the solid electrolyte composition of the present invention may contain is preferably a negative electrode active material capable of reversibly intercalating and deintercalating lithium ions. The above-described material is not particularly limited as long as the material has the above-described characteristics, and examples thereof include carbonaceous materials, metal oxides such as tin oxide, silicon oxide, metal complex oxides, a lithium single body, lithium alloys such as lithium aluminum alloys, metals capable of forming alloys with lithium such as Sn, Si, Al, and In and the like. Among these, carbonaceous materials or metal complex oxides are preferably used in terms of reliability. In addition, the metal complex oxides are preferably capable of absorbing and deintercalating lithium. The materials are not particularly limited, but preferably contain titanium and/or lithium as constituent components from the viewpoint of high-current density charging and discharging characteristics.

The carbonaceous material that is used as the negative electrode active material is a material substantially consisting of carbon. Examples thereof include petroleum pitch, carbon black such as acetylene black (AB), graphite (natural graphite, artificial graphite such as highly oriented pyrolytic graphite), and carbonaceous material obtained by firing a variety of synthetic resins such as polyacrylonitrile (PAN)-based resins or furfuryl alcohol resins. Furthermore, examples thereof also include a variety of carbon fibers such as PAN-based carbon fibers, cellulose-based carbon fibers, pitch-based carbon fibers, vapor-grown carbon fibers, dehydrated polyvinyl alcohol (PVA)-based carbon fibers, lignin carbon fibers, glassy carbon fibers, and active carbon fibers, mesophase microspheres, graphite whisker, flat graphite, and the like.

The metal oxides and the metal complex oxides being applied as the negative electrode active material are particularly preferably amorphous oxides, and furthermore, chalcogenides which are reaction products between a metal element and an element belonging to Group XVI of the periodic table are also preferably used. The amorphous oxides mentioned herein refer to oxides having a broad scattering band having a peak of a $2\theta$ value in a range of 20° to 40° in an X-ray diffraction method in which CuK$\alpha$ rays are used and may have crystalline diffraction lines.

In a compound group consisting of the amorphous oxides and the chalcogenides, amorphous oxides of semi-imetal elements and chalcogenides are more preferred, and elements belonging to Groups XIII (IIIB) to XV (VB) of the periodic table, oxides consisting of one element or a combination of two or more elements of Al, Ga, Si, Sn, Ge, Pb, Sb, and Bi, and chalcogenides are particularly preferred. Specific examples of preferred amorphous oxides and chalcogenides include $Ga_2O_3$, $SiO$, $GeO$, $SnO$, $SnO_2$, $PbO$, $PbO_2$, $Pb_2O_3$, $Pb_2O_4$, $Pb_3O_4$, $Sb_2O_3$, $Sb_2O_4$, $Sb_2O_8Bi_2O_3$, $Sb_2O_8Si_2O_3$, $Bi_2O_4$, $SnSiO_3$, $GeS$, $SnS$, $SnS_2$, $PbS$, $PbS_2$, $Sb_2S_3$, $Sb_2S_5$, and $SnSiS_3$. In addition, these amorphous oxides may be complex oxides with lithium oxide, for example, $Li_2SnO_2$.

The negative electrode active material preferably contains a titanium atom. More specifically, $Li_4Ti_5O_{12}$ (lithium titanium oxide [LTO]) is preferred since the volume fluctuation during the absorption and deintercalation of lithium ions is small, and thus the high-speed charging and discharging characteristics are excellent, and the deterioration of electrodes is suppressed, whereby it becomes possible to improve the service lives of lithium ion secondary batteries.

In the present invention, a Si-based negative electrode is also preferably applied. Generally, a Si negative electrode is capable of absorbing a larger number of Li ions than a carbon negative electrode (graphite, acetylene black, or the like). That is, the amount of Li ions absorbed per unit mass increases. Therefore, it is possible to increase the battery capacity. As a result, there is an advantage that the battery drying duration can be extended.

The shape of the negative electrode active material is not particularly limited, but is preferably a particle shape. The average particle diameter of the negative electrode active material is preferably 0.1 $\mu$m to 60 $\mu$m. In order to provide a predetermined particle diameter, an ordinary crusher or classifier is used. For example, a mortar, a ball mill, a sand mill, an oscillatory ball mill, a satellite ball mill, a planetary ball mill, a swirling airflow-type jet mill, a sieve, or the like is preferably used. During crushing, it is also possible to carry out wet-type crushing in which water or an organic solvent such as methanol is made to coexist as necessary. In order to provide a desired particle diameter, classification is preferably carried out. The classification method is not particularly limited, and it is possible to use a sieve, a wind power classifier, or the like depending on the necessity. Both of dry-type classification and wet-type classification can be carried out. The average particle diameter of negative electrode active material particles can be measured using the same method as the method for measuring the volume-average particle diameter of the positive electrode active material.

The chemical formulae of the compounds obtained using a firing method can be computed using an inductively coupled plasma (ICP) emission spectroscopic analysis method as a measurement method from the mass difference of powder before and after firing as a convenient method.

The negative electrode active material may be used singly or two or more negative electrode active materials may be used in combination.

In the case of forming a negative electrode active material layer, the mass (mg) of the negative electrode active material per unit area ($cm^2$) in the negative electrode active material layer (weight per unit area) is not particularly limited and can be appropriately determined depending on the set battery capacity.

The content of the negative electrode active material in the solid electrolyte composition is not particularly limited, but is preferably 10% to 80% by mass and more preferably 20% to 80% by mass with respect to a solid content of 100% by mass.

The surfaces of the positive electrode active material and/or the negative electrode active material may be coated with a separate metal oxide. Examples of the surface coating agent include metal oxides and the like containing Ti, Nb, Ta, W, Zr, Al, Si, or Li. Specific examples thereof include titanium oxide spinel, tantalum-based oxides, niobium-based oxides, lithium niobate-based compounds, and the like, and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, $B_2O_3$, and the like.

In addition, a surface treatment may be carried out on the surfaces of electrodes including the positive electrode active material or the negative electrode active material using sulfur, phosphorous, or the like.

Furthermore, the particle surfaces of the positive electrode active material or the negative electrode active material may be treated with an active light ray or an active gas (plasma or the like) before or after the coating of the surfaces.

(Preparation of Solid Electrolyte Composition)

The solid electrolyte composition of the present invention is prepared by dispersing the inorganic solid electrolyte (A) in the presence of the dispersion medium (C) to produce a slurry.

The slurry is produced by mixing the inorganic solid electrolyte and the dispersion medium using a variety of mixers. The mixing device is not particularly limited, and examples thereof include a ball mill, a beads mill, a planetary mixer, a blade mixer, a roll mill, a kneader, and a disc mill. The mixing conditions are not particularly limited; however, in the case of using a ball mill, the inorganic solid electrolyte and the dispersion medium are preferably mixed together at 150 to 700 rpm (rotation per minute) for one hour to 24 hours.

The binder (B1) may be added and mixed at the same time as a dispersion step of the inorganic solid electrolyte (A) or may be separately added and mixed. In addition, in the case of preparing a solid electrolyte composition additionally containing components such as an active material and a particle dispersant, the components may be added and mixed at the same time as a dispersion step of the inorganic solid electrolyte (A) or may be separately added and mixed.

[Sheet for all-solid state secondary battery]

The solid electrolyte-containing sheet that is used in the present invention can be preferably used in all-solid state secondary batteries and is modified in a variety of aspects depending on the uses. Examples thereof include a sheet that is preferably used in a solid electrolyte layer (also referred to as a solid electrolyte sheet for an all-solid state secondary battery), a sheet that is preferably used in an electrode or a laminate of an electrode and a solid electrolyte layer (an electrode sheet for an all-solid state secondary battery), and the like. In the present invention, a variety of sheets described above will be collectively referred to as a sheet for an all-solid state secondary battery in some cases.

The sheet for an all-solid state secondary battery is a sheet having a solid electrolyte layer or an active material layer (electrode layer) on a base material. This sheet for an all-solid state secondary battery may further have other layers as long as the sheet has the base material and the solid electrolyte layer or the active material layer, but a sheet having an active material layer is classified into an electrode sheet for an all-solid state secondary battery described below. Examples of other layers include a primer layer, a protective layer, a collector, a coating layer (a collector, a solid electrolyte layer, or an active material layer), and the like.

Examples of the solid electrolyte sheet for an all-solid state secondary battery include a sheet having a solid electrolyte layer and a protective layer on a base material in this order.

The base material is not particularly limited as long as the base material is capable of supporting the solid electrolyte layer, and examples thereof include sheet bodies (plate-like bodies) of materials, organic materials, inorganic materials, and the like described in the section of the collector described below. Examples of the organic materials include a variety of polymers and the like, and specific examples thereof include polyethylene terephthalate, polypropylene, polyethylene, cellulose, and the like. Examples of the inorganic materials include glass, ceramic, and the like.

The constitution and the layer thickness of the solid electrolyte layer in the sheet for an all-solid state secondary battery are identical to the constitution and the layer thickness of the solid electrolyte layer described in the section of an all-solid state secondary battery of the present invention.

This sheet is obtained by forming a film of the solid electrolyte composition of the present invention (by means of application and drying) on the base material (possibly, through other layers) and forming a solid electrolyte layer on the base material.

Here, the solid electrolyte composition of the present invention can be prepared using the above-described method.

An electrode sheet for an all-solid state secondary battery of the present invention (also simply referred to as "the electrode sheet of the present invention") includes a primer layer containing the binder (B2) between a collector and an active material layer formed using the solid electrolyte composition, and the binder (B2) is partially eluted to the active material layer.

Here, the expression "the binder (B2) is partially eluted to the active material layer" means a state in which the binder (B2) is partially eluted to the active material layer and is solidified. This state refers to a state in which the layer interface between the active material layer and the primer layer is disturbed and becomes an uneven shape and a bonding property by a so-called anchor effect develops.

The above-described state is confirmed from the fact that the interface between the active material layer and the primer layer is not clear in the case of observing a cross section of the laminate structure of the active material layer and the primer layer using a scanning electron microscope (SEM) or the like. In a case in which the binder (B2) constituting the primer layer enters and is present on the active material layer side of the contact surface between the primer layer and the active material layer (present inside the active material layer), this is defined as "the binder (B2) being partially eluted to the active material layer".

This electrode sheet is generally a sheet having a collector, a primer layer, and an active material layer in this order, and an aspect of having a collector, a primer layer, an active material layer, and a solid electrolyte layer in this order and an aspect of having a collector, a primer layer, an active material layer, a solid electrolyte layer(, a primer layer), and an active material layer in this order are also considered as the electrode sheet.

The constitution and the layer thicknesses of the respective layers constituting the electrode sheet are identical to the constitution and the layer thicknesses of individual layers described in the section of an all-solid state secondary battery of the present invention.

The electrode sheet is obtained by forming a film of the solid electrolyte composition of the present invention which contains the active material (by means of application and drying) on the primer layer on the collector and forming an active material layer on the primer layer. A method for preparing the solid electrolyte composition containing an active material is identical to the method for preparing the solid electrolyte composition except for the fact that the active material is used.

An active material layer and/or a solid electrolyte layer formed of the solid electrolyte composition of the present invention preferably have the same kinds and content ratios of components as those of the solid content of the solid electrolyte composition.

Meanwhile, the solid electrolyte-containing sheet may also contain a dispersion medium as long as the battery performance is not influenced. Specifically, the solid electrolyte-containing sheet may contain 1 ppm or more and 10,000 ppm or less of a dispersion medium of the total mass.

[All-solid state secondary battery]

An all-solid state secondary battery of the present invention has a positive electrode, a negative electrode facing the positive electrode, and a solid electrolyte layer between the positive electrode and the negative electrode. The positive electrode has a positive electrode active material layer on a positive electrode collector. The negative electrode has a negative electrode active material layer on a negative electrode collector. At least any one electrode of the positive electrode or the negative electrode has the primer layer between the collector and the active material layer.

In the all-solid state secondary battery, among the negative electrode active material layer, the positive electrode active material layer, and the solid electrolyte layer, at least the negative electrode active material layer and/or the positive electrode active material layer are formed of the solid electrolyte composition of the present invention.

The kinds and the content ratio of the components of the active material layers and/or the solid electrolyte layer formed of the solid electrolyte composition are preferably identical to those in the solid content of the solid electrolyte composition.

Hereinafter, a preferred embodiment of the present invention will be described with reference to Fig. 1, but the present invention is not limited thereto.

[Positive electrode active material layer, solid electrolyte layer, and negative electrode active material layer]

In the all-solid state secondary battery 10, among the positive electrode active material layer, the solid electrolyte layer, and the negative electrode active material layer, at least the negative electrode active material layer and/or the positive electrode active material layer are formed of the solid electrolyte composition of the present invention.

That is, the solid electrolyte layer 3 is formed of the solid electrolyte composition of the present invention, the solid electrolyte layer 3 includes the inorganic solid electrolyte and the binder (B1). The solid electrolyte layer, generally, does not include any positive electrode active material and/or any negative electrode active material.

In a case in which the positive electrode active material layer 4 and/or the negative electrode active material layer 2 are formed of the solid electrolyte composition of the present invention, the positive electrode active material layer 4 and the negative electrode active material layer 2 respectively include a positive electrode active material or a negative electrode active material and further include the inorganic solid electrolyte and the binder (B1). In a case in which the active material layers contain the inorganic solid electrolyte, it is possible to improve the ion conductivity.

While not illustrated, in Fig. 1, the primer layer is present between the positive electrode collector 5 and the positive electrode active material layer 4 and/or between the negative electrode collector 1 and the negative electrode active material layer 2. It is considered that the binder (B2) contained in the primer layer is partially dissolved near the interface with the active material layer, is eluted to the active material layer, and is solidified. As a result, it is considered that the bonding property between the primer layer and the active material layer is excellent, and the bonding property between the active material layer and the collector is excellent through the primer layer.

The kinds of the inorganic solid electrolytes and the binder (B1) that the positive electrode active material layer 4, the solid electrolyte layer 3, and the negative electrode active material layer 2 contain may be identical to or different from each other.

In the present invention, in the all-solid state secondary battery, the negative electrode active material layer and/or the positive electrode active material layer are produced using the solid electrolyte composition containing the active material, the binder (B1), and the solid particles such as the inorganic solid electrolyte, and the negative electrode and/or the positive electrode have a primer layer containing the binder (B2). Therefore, it is possible to improve the bonding property between solid particles and between the primer layer and the active material layer, and consequently, favorable cycle characteristics of the all-solid state secondary battery can also be realized.

<Primer layer>

The primer layer is not particularly limited as long as the primer layer has an electrical conductivity. For example, a conductive coat in which conductive particles are dispersed can be preferably used. As the conductive particles, the above-described conductive auxiliary agent can be used.

The primer layer can be formed on the collector using a composition for forming the primer layer in the same manner as a positive electrode active material layer described below or the like. The composition for forming the primer layer preferably contains a polymer and the above-described dispersion medium, and contents thereof can be appropriately adjusted.

In addition, the polymer that the composition for forming the primer layer contains is not particularly limited, but is preferably the binder (B2), and, among the above-described dispersion media, the dispersion medium (C2) is preferably contained. In such a case, it is considered that the effect of improving the bonding property between the active material layer and the primer layer by the anchor effect is obtained as described above.

Additionally, the primer layer preferably also contains a conductive polymer (examples thereof include polythiophene, polyaniline, polypyrrole, polyacetylene, and polymers into which the above-described polymer is doped).

In a case in which the primer layer contains the conductive polymer, it is possible to enhance the bonding property between the active material layer and the collector and the electrical conductivity of the electrode sheet.

[Collector (Metal Foil)]

The positive electrode collector 5 and the negative electrode collector 1 are preferably an electron conductor.

In the present invention, there are cases in which any or both of the positive electrode collector and the negative electrode collector will be simply referred to as the collector.

As a material forming the positive electrode collector, aluminum, an aluminum alloy, stainless steel, nickel, titanium, or the like, and furthermore, a material obtained by treating the surface of aluminum or stainless steel with carbon, nickel, titanium, or silver (a material forming a thin film) is preferred, and, among these, aluminum and an aluminum alloy are more preferred.

As a material forming the negative electrode collector, aluminum, copper, a copper alloy, stainless steel, nickel, titanium, or the like, and furthermore, a material obtained by treating the surface of aluminum, copper, a copper alloy, or stainless steel with carbon, nickel, titanium, or silver is preferred, and aluminum, copper, a copper alloy, or stainless steel is more preferred.

Regarding the shape of the collector, generally, collectors having a film sheet-like shape are used, but it is also possible to use net-shaped collectors, punched collectors, compacts of lath bodies, porous bodies, foaming bodies, or fiber groups, and the like.

The thickness of the collector is not particularly limited, but is preferably 1 to 500 $\mu$m. In addition, the surface of the collector is preferably provided with protrusions and recesses by means of a surface treatment.

In the present invention, a functional layer, member, or the like may be appropriately interposed or disposed between the respective layers of the negative electrode collector, the negative electrode active material layer, the solid electrolyte layer, the positive electrode active material layer, and the positive electrode collector or on the outside thereof. In addition, the respective layers may be composed of a single layer or multiple layers.

[Chassis]

It is possible to produce the basic structure of the all-solid state secondary battery by disposing the respective layers described above. Depending on the use, the basic structure may be directly used as an all-solid state secondary battery, but the basic structure may be used after being enclosed in an appropriate chassis in order to have a dry battery form. The chassis may be a metallic chassis or a resin (plastic) chassis. In a case in which a metallic chassis is used, examples thereof include an aluminum alloy chassis and a stainless-steel chassis. The metallic chassis is preferably classified into a positive electrode-side chassis and a negative electrode-side chassis and electrically connected to the positive electrode collector and the negative electrode collector respectively. The positive electrode-side chassis and the negative electrode-side chassis are preferably integrated by being joined together through a gasket for short circuit prevention.

[Manufacturing of solid electrolyte-containing sheet]

In the present invention, the solid electrolyte composition of the present invention is applied and dried on a base material, and the dispersion medium is removed, thereby forming the solid electrolyte-containing sheet containing the inorganic solid electrolyte and the binder (B1). Therefore, a sheet for an all-solid state secondary battery that is a sheet having a base material and a solid electrolyte layer can be produced.

Additionally, regarding steps such as application, it is possible to use a method described in the following section of the manufacturing of an all-solid state secondary battery.

[All-solid state secondary battery and manufacturing of electrode sheet for all-solid state secondary battery]

The all-solid state secondary battery and the electrode sheet for an all-solid state secondary battery can be manufactured in the same manner as in the method for manufacturing the solid electrolyte-containing sheet.

In a case in which the solid electrolyte composition of the present invention contains an active material, the active material is preferably applied not onto the base material but onto the primer layer. In this case, an electrode sheet for an all-solid state secondary battery which is a sheet having the collector, the primer layer, and the active material layer in this order can be produced.

That is, a first aspect of the method for manufacturing an electrode sheet for an all-solid state secondary battery of the present invention has a step of forming a primer layer on a collector using the dispersion medium (C), drying the primer layer, and then applying the solid electrolyte composition of the present invention onto the primer layer. Therefore, the bonding property between the collector and the active material layer enhances, which is preferable.

The primer layer can be formed by applying the composition for forming the primer layer onto the collector and heating and drying the composition for forming the primer layer, and, regarding the coating and the heating and drying, it is possible to apply those described in the formation of individual layers described below. Meanwhile, in the present invention, the dispersion medium (C2) is preferably removed by heating and drying.

In addition, a second aspect of the method for manufacturing an electrode sheet for an all-solid state secondary battery of the present invention has a step of applying the solid electrolyte composition for forming an active material layer of the present invention onto the primer layer and then heating and drying the applied solid electrolyte composition, and the heating and drying temperature is the boiling point $TC_1$ of the dispersion medium (C1) or higher and lower than the boiling point $TC_2$ of the dispersion medium (C2). Therefore, the dispersion medium (C1) in the dispersion medium volatilizes first, and the dispersion medium (C2) volatilizes later, and thus, in the applied solid electrolyte composition for forming an active material layer, the ratio of the dispersion medium (C2) in all of the dispersion media increases. In addition, consequently, the time during which the dispersion medium (C2) is in contact with the primer layer increases, the dispersion medium (C2) intrudes into the primer layer during that time, and the binder (C2) is swollen and, furthermore, partially dissolved, whereby the interface between the primer layer and the active material layer is disturbed, and the bonding property improves, which is preferable.

Among them, the electrode sheet for an all-solid state secondary battery of the present invention is preferably manufactured using the first aspect and the second aspect.

In addition, the all-solid state secondary battery can be manufactured using an ordinary method except for the fact that the ordinary method includes the method for manufacturing the electrode sheet for an all-solid state secondary battery. Specifically, the all-solid state secondary battery and the electrode sheet for an all-solid state secondary battery can be manufactured by forming the respective layers described above using the solid electrolyte composition of the present invention or the like. Meanwhile, the positive electrode active material layer and/or the negative electrode active material layer may be produced using the method for manufacturing the electrode sheet for an all-solid state secondary battery, and other layers may also be produced by an ordinary method using a solid electrolyte composition tht is not the present invention. Hereinafter, the manufacturing method will be described in detail.

The all-solid state secondary battery of the present invention can be manufactured using the following method.

The all-solid state secondary battery can be manufactured using a method including a step of forming a primer layer on a metal foil that serves as a collector using the dispersion medium (C2) capable of dissolving the binder (B2), drying the primer layer, and then applying the solid electrolyte composition for forming an active material layer of the present invention onto the primer layer to form a coated film (form a film).

For example, a primer layer is formed on a metal foil that is a positive electrode collector using the dispersion medium (C2) capable of dissolving the binder (B2), the solid electrolyte composition containing a positive electrode active material is applied as a material for a positive electrode (a composition for a positive electrode layer) onto the primer layer so as to form a positive electrode active material layer, thereby producing a positive electrode sheet for an all-solid state secondary battery. Next, a solid electrolyte composition for forming a solid electrolyte layer is applied onto the positive electrode active material layer so as to form a solid electrolyte layer. Furthermore, a solid electrolyte composition containing a negative electrode active material is applied as a material for a negative electrode (a composition for a negative electrode layer) onto the solid electrolyte layer so as to form a negative electrode active material layer. A negative electrode collector (a metal foil) is overlaid on the negative electrode active material layer, whereby it is possible to obtain an all-solid state secondary battery having a structure in which the solid electrolyte layer is sandwiched between the positive electrode active material layer and the negative electrode active material layer. A desired all-solid state secondary battery can be produced by enclosing the all-solid state secondary battery in a chassis as necessary.

In addition, an aspect in which a primer layer is formed on a negative electrode active material layer using the dispersion medium (C2) capable of dissolving the binder (B2) instead of or together with the formation of the primer layer between the positive electrode collector and the positive electrode active material layer in the above-described aspect, and a negative electrode collector (metal foil) is overlaid on the primer layer is also preferably exemplified. It is also possible to manufacture an all-solid state secondary battery by carrying out the methods for forming the respective layers in a reverse order so as to form a primer layer, a negative electrode active material layer, a solid electrolyte layer, and a positive electrode active material layer (another primer layer depending on cases) on a negative electrode collector and overlaying a positive electrode collector thereon.

As another method, the following method can be exemplified. That is, a positive electrode sheet for an all-solid state secondary battery is produced as described above. In addition, a primer layer is formed on a metal foil that is a negative electrode collector using the dispersion medium (C2) capable of dissolving the binder (B2), the solid electrolyte composition containing a negative electrode active material is applied as a material for a negative electrode (a composition for a negative electrode layer) onto the primer layer so as to form a negative electrode active material layer, thereby producing a negative electrode sheet for an all-solid state secondary battery. Next, a solid electrolyte layer is formed on the active material layer in any one of these sheets as described above. Furthermore, the other one of the positive electrode sheet for an all-solid state secondary battery and the negative electrode sheet for an all-solid state secondary battery is laminated on the solid electrolyte layer so that the solid electrolyte layer and the active material layer come into contact with each other. An all-solid state secondary battery can be manufactured as described above.

As still another method, the following method can be exemplified. That is, a positive electrode sheet for an all-solid state secondary battery and a negative electrode sheet for an all-solid state secondary battery are produced as described above. In addition, separately from the positive electrode sheet for an all-solid state secondary battery and the negative electrode sheet for an all-solid state secondary battery, a solid electrolyte composition is applied onto a base material, thereby producing a solid electrolyte sheet for an all-solid state secondary battery consisting of a solid electrolyte layer. Furthermore, the positive electrode sheet for an all-solid state secondary battery and the negative electrode sheet for an all-solid state secondary battery are laminated together so as to sandwich the solid electrolyte layer that has been peeled off from the base material. An all-solid state secondary battery can be manufactured as described above.

An all-solid state secondary battery can be manufactured by combining the above-described forming methods. For example, a positive electrode sheet for an all-solid state secondary battery, a negative electrode sheet for an all-solid state secondary battery, and a solid electrolyte sheet for an all-solid state secondary battery are produced respectively. Next, a solid electrolyte layer peeled off from a base material is laminated on the negative electrode sheet for an all-solid state secondary battery and is then attached to the positive electrode sheet for an all-solid state secondary battery, whereby an all-solid state secondary battery can be manufactured. In this method, it is also possible to laminate the solid electrolyte layer on the positive electrode sheet for an all-solid state secondary battery and attach the solid electrolyte layer to the negative electrode sheet for an all-solid state secondary battery.

(Formation of Individual Layers (Film Formation))

The method for applying the solid electrolyte composition is not particularly limited and can be appropriately selected. Examples thereof include coating (preferably wet-type coating), spray coating, spin coating, dip coating, slit coating, stripe coating, and bar coating.

At this time, the solid electrolyte composition may be dried after being applied or may be dried after being applied to multiple layers. The drying temperature is not particularly limited. The lower limit is preferably 30°C or higher, more preferably 60°C or higher, and still more preferably 80°C or higher, and the upper limit is preferably 300°C or lower, more preferably 250°C or lower, and still more preferably 200°C or lower. In a case in which the compositions are heated in the above-described temperature range, it is possible to remove the dispersion medium and form a solid state. In addition, the temperature is not excessively increased, and the respective members of the all-solid state secondary battery are not impaired, which is preferable. Therefore, in the all-solid state secondary battery, excellent total performance is exhibited, and it is possible to obtain a favorable bonding property.

After the application of the solid electrolyte composition or the production of the all-solid state secondary battery, the respective layers or the all-solid state secondary battery is preferably pressurized. In addition, the respective layers are also preferably pressurized in a state of being laminated together. Examples of the pressurization method include a hydraulic cylinder pressing machine and the like. The welding pressure is not particularly limited, but is, generally, preferably in a range of 50 to 1,500 MPa.

In addition, the applied solid electrolyte composition may be heated at the same time as pressurization. The heating temperature is not particularly limited, but is generally in a range of 30°C to 300°C. The respective layers or the all-solid state secondary battery can also be pressed at a temperature higher than the glass transition temperature of the inorganic solid electrolyte.

The pressurization may be carried out in a state in which the applied solvent or dispersion medium has been dried in advance or in a state in which the solvent or the dispersion medium remains.

Meanwhile, the respective compositions may be applied at the same time, and the application, the drying, and the pressing may be carried out simultaneously and/or sequentially. The respective compositions may be applied to separate base materials and then laminated by means of transfer.

The atmosphere during the pressurization is not particularly limited and may be any one of in the atmosphere, under the dried air (the dew point: -20°C or lower), in an inert gas (for example, in an argon gas, in a helium gas, or in a nitrogen gas), and the like.

The pressing time may be a short time (for example, within several hours) at a high pressure or a long time (one day or longer) under the application of an intermediate pressure. In the case of members other than the sheet for an all-solid state secondary battery, for example, the all-solid state secondary battery, it is also possible to use a restraining device (screw fastening pressure or the like) of the all-solid state secondary battery in order to continuously apply an intermediate pressure.

The pressing pressure may be a pressure that is constant or varies with respect to a portion under pressure such as a sheet surface.

The pressing pressure can be changed depending on the area or film thickness of the portion under pressure. In addition, it is also possible to change the same portion with a pressure that varies stepwise.

A pressing surface may be flat or roughened.

(Initialization)

The all-solid state secondary battery manufactured as described above is preferably initialized after the manufacturing or before the use. The initialization is not particularly limited, and it is possible to initialize the all-solid state secondary battery by, for example, carrying out initial charging and discharging in a state in which the pressing pressure is increased and then releasing the pressure up to a pressure at which the all-solid state secondary battery is ordinarily used.

[Usages of all-solid state secondary battery]

The all-solid state secondary battery of the present invention can be applied to a variety of usages. Application aspects are not particularly limited, and, in the case of being mounted in electronic devices, examples thereof include notebook computers, pen-based input personal computers, mobile personal computers, e-book players, mobile phones, cordless phone handsets, pagers, handy terminals, portable faxes, mobile copiers, portable printers, headphone stereos, video movies, liquid crystal televisions, handy cleaners, portable CDs, mini discs, electric shavers, transceivers, electronic notebooks, calculators, portable tape recorders, radios, backup power supplies, memory cards, and the like. Additionally, examples of consumer usages include automobiles (electric vehicles and the like), electric vehicles, motors, lighting equipment, toys, game devices, road conditioners, watches, strobes, cameras, medical devices (pacemakers, hearing aids, shoulder massage devices, and the like), and the like. Furthermore, the all-solid state secondary battery can be used for a variety of military usages and universe usages. In addition, the all-solid state secondary battery can also be combined with solar batteries.

According to the preferred embodiment of the present invention, individual application forms as described below are derived.

[1] All-solid state secondary batteries in which at least one layer of a positive electrode active material layer, a solid electrolyte layer, or a negative electrode active material layer contains a lithium salt.

[2] Methods for manufacturing an all-solid state secondary battery in which a solid electrolyte layer is formed by applying a slurry including a sulfide-based inorganic solid electrolyte dispersed using a dispersion medium in a wet manner.

[3] Solid electrolyte compositions containing an active material for producing the all-solid state secondary battery and a lithium salt.

[4] Electrode sheets for a battery obtained by applying the solid electrolyte composition onto a primer layer on a metal foil to form a film.

[5] Methods for manufacturing an electrode sheet for a battery in which the solid electrolyte composition is applied onto a primer layer on a metal foil, thereby forming a film.

As described in the preferred embodiments [2] and [5], preferred methods for manufacturing the all-solid state secondary battery and the electrode sheet for a battery are all wet-type processes. Therefore, even in a region in at least one layer of the positive electrode active material layer or the negative electrode active material layer in which the content of the inorganic solid electrolyte is as low as 10% by mass or less, the adhesiveness between the active material and the inorganic solid electrolyte, an efficient ion conduction path can be maintained, and it is possible to manufacture an all-solid state secondary battery having a high energy density (Wh/kg) and a high output density (W/kg) per battery mass.

All-solid state secondary batteries refer to secondary batteries having a positive electrode, a negative electrode, and an electrolyte which are all composed of solid. In other words, all-solid state secondary batteries are differentiated from electrolytic solution-type secondary batteries in which a carbonate-based solvent is used as an electrolyte. Among these, the present invention is assumed to be an inorganic all-solid state secondary battery. All-solid state secondary batteries are classified into organic (high-molecular-weight) all-solid state secondary batteries in which a high-molecular-weight compound such as polyethylene oxide is used as an electrolyte and inorganic all-solid state secondary batteries in which the Li-P-S-based glass, LLT, LLZ, or the like is used. Meanwhile, the application of organic compounds to inorganic all-solid state secondary batteries is not inhibited, and organic compounds can also be applied as binders or additives of positive electrode active materials, negative electrode active materials, and inorganic solid electrolytes.

Inorganic solid electrolytes are differentiated from electrolytes in which the above-described high-molecular-weight compound is used as an ion conductive medium (high-molecular-weight electrolyte), and inorganic compounds serve as ion conductive media. Specific examples thereof include the Li-P-S glass, LLT, and LLZ. Inorganic solid electrolytes do not emit positive ions (Li ions) and exhibit an ion transportation function. In contrast, there are cases in which materials serving as an ion supply source which is added to electrolytic solutions or solid electrolyte layers and emits positive ions (Li ions) are referred to as electrolytes; however, in the case of being differentiated from electrolytes as the ion transportation materials, the materials are referred to as "electrolyte salts" or "supporting electrolytes". Examples of the electrolyte salts include LiTFSI.

In the present invention, "compositions" refer to mixtures obtained by uniformly mixing two or more components. Here, compositions may partially include agglomeration or uneven distribution as long as the compositions substantially maintain uniformity and exhibit desired effects.

Examples

Hereinafter, the present invention will be described in more detail on the basis of examples. Meanwhile, the present invention is not interpreted to be limited thereto. "Parts" and "%" that represent compositions in the following examples are mass-based unless particularly otherwise described. In addition, "room temperature" refers to 25°C, and "normal pressure" refers to 760 mmHg.

<Synthesis of sulfide-based inorganic solid electrolyte>

- Synthesis of Li-P-S-based glass -

As a sulfide-based inorganic solid electrolyte, Li-P-S-based glass was synthesized with reference to a non-patent document of T. Ohtomo, A. Hayashi, M. Tatsumisago, Y. Tsuchida, S. HamGa, K. Kawamoto, Journal of Power Sources, 233, (2013), pp. 231 to 235 and A. Hayashi, S. Hama, H. Morimoto, M. Tatsumisago, T. Minami, Chem. Lett., (2001), pp. 872 and 873.

Specifically, in a globe box under an argon atmosphere (dew point: -70°C), lithium sulfide ($Li_2S$, manufactured by Aldrich-Sigma, Co. LLC. Purity: >99.98%) (2.42 g) and diphosphorus pentasulfide ($P_2S_5$, manufactured by Aldrich-Sigma, Co. LLC. Purity: >99%) (3.90 g) were respectively weighed, injected into an agate mortar, and mixed using an agate muddler for five minutes. Meanwhile, the mixing ratio between $Li_2S$ and $P_2S_5$ was set to 75:25 in terms of molar ratio.

Sixty six zirconia beads having a diameter of 5 mm were injected into a 45 mL zirconia container (manufactured by Fritsch Japan Co., Ltd.), the full amount of the mixture of the lithium sulfide and the diphosphorus pentasulfide was injected thereinto, and the container was sealed in an argon atmosphere. The container was set in a planetary ball mill P-7 (trade name) manufactured by Fritsch Japan Co., Ltd., mechanical milling was carried out at a temperature of 25°C and a rotation speed of 510 rpm for 20 hours, thereby obtaining yellow powder (5.90 g) of a sulfide-based inorganic solid electrolyte (Li-P-S-based glass). The ion conductivity was 0.35 mS/cm, and the particle diameter was 19.5 μm.

[Example 1]

<Preparation of individual compositions>

(1) Preparation of solid electrolyte composition S-1

Fifty zirconia beads having a diameter of 3 mm were injected into a 45 mL zirconia container (manufactured by Fritsch Japan Co., Ltd.), an oxide-based inorganic solid electrolyte LLZ (manufactured by Toshima Manufacturing Co., Ltd.) (1.5 g) and an exemplary compound (B-1) (0.02 g) were added thereto, and heptane/toluene (70/30) (5.3 g) was injected thereinto as a dispersion medium. After that, the container was set in a planetary ball mill P-7 (trade name) manufactured by Fritsch Japan Co., Ltd., the components were continuously mixed together at a temperature of 25°C and a rotation speed of 300 rpm for two hours, thereby preparing a solid electrolyte composition S-1.

(2) Preparation of solid electrolyte composition S-2

Fifty zirconia beads having a diameter of 3 mm were injected into a 45 mL zirconia container (manufactured by Fritsch Japan Co., Ltd.), the Li-P-S-based glass synthesized above (0.8 g), the exemplary compound (B-1) (0.04 g), and heptane/toluene (70/30) (3.6 g) were injected thereinto as a dispersion medium. After that, the container was set in a planetary ball mill P-7 (trade name) manufactured by Fritsch Japan Co., Ltd., the components were continuously mixed together at a temperature of 25°C and a rotation speed of 300 rpm for two hours, thereby preparing a solid electrolyte composition S-2.

(3) Preparation of solid electrolyte compositions S-3 to S-21 and T-1 to T-5

Solid electrolyte compositions S-3 to S-21 and T-1 to T-5 were prepared using the same method as for the solid electrolyte composition S-1 or S-2 except for the fact that the compositions were changed as shown in Table 1.

Meanwhile, only the solid electrolyte compositions S-20 and S-21 contain a lithium salt and an ion liquid in addition to the inorganic solid electrolyte (A), the binder (B1), and the dispersion medium (C).

Here, the solid electrolyte compositions S-1 to S-21 are the solid electrolyte composition of the present invention, and the solid electrolyte compositions T-1 to T-5 are comparative solid electrolyte compositions.

<Testing>

For the solid electrolyte compositions prepared above, the particle diameters and the ion conductivities of the solid electrolytes were measured using the following testing methods. In addition, the measurement results are summarized in Table 1.

[Testing Example 1] Method for measuring average particle diameter

Using a dynamic light scattering-type particle size distribution measurement instrument according to JIS 8826:2005 (manufactured by Horiba Ltd., LB-500), the solid electrolyte composition prepared above was split into a 20 ml sample bottle as a sample and diluted and adjusted using the dispersion medium used to prepare the solid electrolyte composition so that a solid content concentration reached 0.2% by mass, data capturing was carried out 50 times using a 2 ml silica cell for measurement at a temperature of 25°C, and the obtained volume-based arithmetic average was considered as the average particle diameter. In addition, a particle diameter at 50% in the cumulative particle size distribution from the fine particle side was considered as the cumulative 50% particle diameter. The average particle diameter of the particles before mixing was measured using this method except for the fact that the concentration of the dried powder was adjusted using heptane so as to reach 0.2% by mass.

As the particle diameter of the inorganic solid electrolyte decreases, the surface contact area with the active material increases, and thus the migration of lithium ions is more likely to occur, which is preferable.

Hereinafter, the average particle diameter will be simply referred to as the particle diameter in some cases.

[Testing Example 2] Measurement of ion conductivity

The slurry of the solid electrolyte composition was dried at normal pressure for two hours on a hot plate heated to 100°C in a dried air atmosphere having a dew point of -60°C. The ion conductivity of the obtained dried powder was measured using an impedance method.

The dried powder (300 mg) was loaded into a cylinder having a diameter of 14.5 mm, thereby producing a coin-like jig. The outer portion of the coin-like jig was sandwiched by jigs capable of applying a pressure of 500 kgf/cm$^2$ between the electrodes and was used for a variety of electrochemical measurements. The ion conductivity of the inorganic solid electrolyte before mixing was measured using this method except for the fact that the dried powder of the inorganic solid electrolyte was used.

The ion conductivity under pressurization (500 kgf/cm$^2$) was obtained in a constant-temperature tank (30°C) using the coin-like jig obtained above and an alternating-current impedance method. At this time, for the pressurization of the coin-like jig, a testing body illustrated in Fig. 2 was used. 11 represents an upper supporting plate, 12 represents a lower supporting plate, 13 represents the coin-type jig, and S represents a screw.

[Table 1-1]

| Solid electrolyte composition | Inorganic solid electrolyte (A) | | Binder (B1) | | | Dispersion medium (C) | | | | | | | Evaluation | |
|---|---|---|---|---|---|---|---|---|---|---|---|---|---|---|
| | | | | | | Dispersion medium (C1) | | Dispersion medium (C2) | | Content ratio (mass ratio) (C1)/(C2) | Parts by mass | | Particle diameter of inorganic solid electrolyte (μm) | Ion conductivity (mS/cm) |
| | Type | Parts by mass | Type | Average particle diameter (μm) | Parts by mass | Type | Boiling point (°C) | Type | Boiling point (°C) | | | | | |
| S-1 | LLZ | 1.5 | B-1 | - | 0.020 | Heptane | 98 | Toluene | 111 | 70/30 | 5.3 | | 2.43 | 0.02 |
| S-2 | Li-P-S | 0.8 | B-1 | - | 0.040 | Heptane | 98 | Toluene | 111 | 70/30 | 3.6 | | 1.32 | 0.22 |
| S-3 | Li-P-S | 0.8 | B-1 | - | 0.040 | Heptane | 98 | Toluene | 111 | 20/80 | 3.6 | | 0.99 | 0.13 |
| S-4 | Li-P-S | 0.8 | B-2 | - | 0.040 | Octane | 125 | Xylene | 140 | 40/60 | 3.6 | | 1.42 | 0.18 |
| S-5 | Li-P-S | 0.8 | B-3 | - | 0.040 | Octane | 125 | Xylene | 140 | 60/40 | 3.6 | | 1.56 | 0.20 |
| S-6 | Li-P-S | 0.8 | B-4 | 0.43 | 0.040 | Octane | 125 | Mesitylene | 164 | 80/20 | 3.6 | | 1.43 | 0.23 |
| S-7 | Li-P-S | 0.8 | B-5 | - | 0.040 | Heptane | 98 | Chlorobenzene | 132 | 70/30 | 3.6 | | 1.78 | 0.13 |
| S-8 | Li-P-S | 1.5 | B-1 | - | 0.040 | Isooctane | 99 | Xylene | 140 | 80/20 | 5.3 | | 1.55 | 0.22 |
| S-9 | Li-P-S | 1.5 | B-2 | - | 0.040 | Cyclohexane | 80 | Toluene | 111 | 85/15 | 5.3 | | 1.22 | 0.28 |
| S-10 | Li-P-S | 1.5 | B-4 | 0.52 | 0.040 | Cyclohexane | 80 | Xylene | 140 | 85/15 | 5.3 | | 1.32 | 0.29 |
| S-11 | Li-P-S | 1.5 | B-4 | 0.52 | 0.040 | Cyclohexane | 80 | Ethylbenzene | 140 | 80/20 | 5.3 | | 0.98 | 0.28 |
| S-12 | Li-P-S | 1.5 | B-5 | - | 0.040 | Methylcyclohexane | 101 | Propylbenzene | 159 | 90/10 | 5.3 | | 0.77 | 0.29 |
| S-13 | Li-P-S | 1.5 | B-4 | 0.34 | 0.040 | Ethylcyclohexane | 131 | Isopropylbenzene | 155 | 90/10 | 5.3 | | 0.95 | 0.29 |
| S-14 | Li-P-S | 1.5 | B-5 | - | 0.040 | Chlorocyclohexane | 186 | Chlorobenzene | 132 | 90/10 | 5.3 | | 1.50 | 0.12 |
| S-15 | Li-P-S | 1.5 | B-4 | 0.39 | 0.040 | Decalin | 186 | Mesitylene | 164 | 90/10 | 5.3 | | 1.39 | 0.19 |
| S-16 | Li-P-S | 1.5 | B-5 | - | 0.040 | Cyclooctane | 149 | Xylene | 140 | 90/10 | 5.3 | | 1.62 | 0.27 |
| S-17 | Li-P-S | 1.5 | B-4 | 0.28 | 0.040 | Cyclooctane | 149 | Mesitylene | 164 | 80/20 | 5.3 | | 0.78 | 0.23 |
| S-18 | Li-P-S | 1.5 | B-5 | - | 0.040 | Cyclooctane | 149 | Mesitylene | 164 | 95/5 | 5.3 | | 0.89 | 0.29 |
| S-19 | Li-P-S | 2.5 | B-1 | - | 0.040 | Heptane | 98 | Toluene | 111 | 99/1 | 5.3 | | 2.86 | 0.22 |
| T-1 | LLZ | 1.5 | B-1 | - | 0.040 | Heptane | 98 | - | | 100/0 | 5.3 | | 6.20 | 0.02 |
| T-2 | Li-P-S | 1.5 | B-1 | - | 0.040 | Heptane | 98 | - | | 100/0 | 5.3 | | 5.73 | 0.22 |

EP 3 467 845 B1

| Solid electro-lyte composi-tion | Inorganic solid electrolyte (A) | | Binder (B1) | | | Dispersion medium (C) | | | | | | | Evaluation | |
|---|---|---|---|---|---|---|---|---|---|---|---|---|---|---|
| | Type | Parts by mass | Type | Average particle di-ameter ($\mu$m) | Parts by mass | Dispersion medium (C1) | | Dispersion medium (C2) | | Content ratio (mass ratio) (C1)/(C2) | Parts by mass | Particle di-ameter of in-organic solid electrolyte ($\mu$ m) | Ion conductiv-ity (mS/cm) |
| | | | | | | Type | Boiling point (°C) | Type | Boiling point (°C) | | | | |
| T-3 | Li-P-S | 1.5 | B-1 | - | 0.040 | Heptane | 98 | Toluene | 111 | 99.5/0.5 | 5.3 | 4.55 | 0.20 |
| T-4 | Li-P-S | 1.5 | B-1 | - | 0.040 | - | | Toluene | 111 | 0/100 | 5.3 | 0.98 | 0.07 |
| T-5 | Li-P-S | 1.5 | B-4 | 0.56 | 0.040 | Decalin | 186 | - | | 100/0 | 5.3 | 4.90 | 0.18 |

[Table 1-2]

| Solid electrolyte composition | Inorganic solid electrolyte (A) | | Binder (B1) | | | Dispersion medium (C) | | | | | | | Lithium salt | | Ion liquid | | Evaluation | |
|---|---|---|---|---|---|---|---|---|---|---|---|---|---|---|---|---|---|---|
| | | | | | | Dispersion medium (C1) | | Dispersion medium (C2) | | Content ratio (mass ratio) (C1)/(C2) | Parts by mass | | | | | | | |
| | Type | Parts by mass | Type | Average particle diameter ($\mu$m) | Parts by mass | Type | Boiling point (°C) | Type | Boiling point (°C) | | | Type | Parts by mass | Type | Parts by mass | Particle diameter of inorganic solid electrolyte ($\mu$m) | Ion conductivity (mS/cm) |
| S-20 | Li-P-S | 1.5 | B-4 | 0.20 | 0.040 | Heptane | 98 | Toluene | 111 | 80/20 | 5.3 | LiTFSI | 0.01 | TMBATFSI | 0.02 | 0.88 | 0.45 |
| S-21 | Li-P-S | 1.5 | B-5 | - | 0.040 | Heptane | 98 | Toluene | 111 | 70/30 | 5.3 | LiTFSI | 0.01 | EMImTFSI | 0.02 | 0.88 | 0.55 |

<Notes of table>

B-1: Styrene-butadiene rubber (product No. 182907, manufactured by Aldrich-Sigma, Co. LLC.)
B-2: PVdF-HFP (manufactured by Arkema S. A.)
B-3: An acrylic acid-methyl acrylate copolymer (copolymerization ratio (molar ratio): acrylic acid/methyl acrylate=20/80, Mw: 25,000)
B-4: Acrylic latex, a binder (B-1) described in JP2015-088486A
B-5: Urethane polymer, an exemplary compound (44) described in JP2015-088480A "-" indicates that the binder was dissolved in the dispersion medium.
LLZ: $Li_7La_3Zr_2O_{12}$ (manufactured by Toshima Manufacturing Co., Ltd.), ion conductivity: 0.03 mS/cm, particle diameter: 8 $\mu$m
Li-P-S: Li-P-S-based glass synthesized above
LiTFSI: Lithium bis(trifluoromethanesulfonyl)imide
TMBATFSI: Trimethyl butyl ammonium bis(trifluoromethanesulfonyl)imide
EMImTFSI: 1-Ethyl-3-methylimidazolium bis(trifluoromethanesulfonyl)imide

The average particle diameter of the binder particles was measured in the following order. A dispersion liquid of 1% by mass of the binder was prepared using a random solvent (the dispersion medium that was used to prepare the solid electrolyte composition). The volume-average particle diameter of the binder particles was measured using this dispersion liquid specimen and a laser diffraction/scattering-type particle size distribution measurement instrument LA-920 (trade name, manufactured by Horiba Ltd.).

As shown in Table 1, in the solid electrolyte compositions T-1, T-2, and T-5 of the comparative examples which contained the dispersion medium (C1), but did not contain the dispersion medium (C2), the miniaturization of the inorganic solid electrolyte was insufficient. In addition, in the solid electrolyte composition T-3 in which the content ratio of the dispersion medium (C1) to the dispersion medium (C2) was greater than the content ratio regulated in the present invention as well, the miniaturization of the inorganic solid electrolyte was insufficient. In the solid electrolyte composition T-4 of the comparative examples which contained the dispersion medium (C2), but did not contain the dispersion medium (C1), the inorganic solid electrolyte was miniaturized, but the ion conductivity decreased due to the decomposition of the inorganic solid electrolyte.

In contrast, in the solid electrolyte composition of the present invention which contained the dispersion medium (C1) and the dispersion medium (C2) in the specific content ratio, a decrease in the ion conductivity due to the decomposition of the inorganic solid electrolyte was suppressed, and the particles of the inorganic solid electrolyte were miniaturized, which led to a high ion conductivity and a small particle diameter of the inorganic solid electrolyte.

<Preparation of solid electrolyte compositions for forming active material layer>

Solid electrolyte compositions for forming an active material layer were prepared using the obtained solid electrolyte compositions.

(1) Preparation of solid electrolyte composition for positive electrode layer (hereinafter, also referred to as the composition for a positive electrode)

Fifty zirconia beads having a diameter of 3 mm were injected into a 45 mL zirconia container (manufactured by Fritsch Japan Co., Ltd.), and the solid electrolyte composition synthesized above (S-1) (6.82 g) was added thereto. A positive electrode active material LCO (3.2 g) was added thereto, and then the container was set in a planetary ball mill P-7 (trade name) manufactured by Fritsch Japan Co., Ltd., and the components were continuously stirred at a temperature of 25°C and a rotation speed of 100 rpm for 10 minutes, thereby preparing a composition for a positive electrode P-1.

(2) Preparation of compositions for positive electrode P-2 to P-21 and HP-1 to HP-5

Compositions for a positive electrode P-2 to P-21 and HP-1 to HP-5 were prepared using the same method as for the composition for a positive electrode P-1 except for the fact that the compositions were changed as shown in Table 2.
Here, the compositions for a positive electrode P-1 to P-21 are the solid electrolyte composition of the present invention, and the compositions for a positive electrode HP-1 to HP-5 are comparative solid electrolyte compositions.
Meanwhile, the particle diameters and the ion conductivities of the inorganic solid electrolytes in the composition for a positive electrode P-1 to P-21 and HP-1 to HP-5 were substantially the same as the particle diameters and the ion conductivities of the inorganic solid electrolytes in the corresponding solid electrolyte compositions S-1 to S-21 and T-1 to T-5.

[Table 2]

| Composition for positive electrode | Solid electrolyte composition | | Positive electrode active material | | Conductive auxiliary agent | |
|---|---|---|---|---|---|---|
| | Type | Parts by mass | Type | Parts by mass | Type | Parts by mass |
| P-1 | S-1 | 6.8 | LCO | 3.2 | - | - |
| P-2 | S-2 | 4.4 | LCO | 2.8 | - | - |
| P-3 | S-3 | 4.4 | LCO | 2.8 | - | - |
| P-4 | S-4 | 4.4 | LCO | 2.8 | - | - |
| P-5 | S-5 | 4.4 | LCO | 2.8 | - | - |
| P-6 | S-6 | 4.4 | LMO | 2.8 | - | - |
| P-7 | S-7 | 6.8 | LMO | 4.2 | - | - |
| P-8 | S-8 | 6.8 | LMO | 4.2 | - | - |
| P-9 | S-9 | 6.8 | LMO | 4.2 | - | - |
| P-10 | S-10 | 6.8 | LMO | 4.2 | - | - |
| P-11 | S-11 | 6.8 | NCA | 3.7 | - | - |
| P-12 | S-12 | 6.8 | NCA | 3.7 | - | - |
| P-13 | S-13 | 6.8 | NCA | 3.7 | - | - |
| P-14 | S-14 | 6.8 | NCA | 3.7 | - | - |
| P-15 | S-15 | 6.8 | NMC | 3.2 | - | - |
| P-16 | S-16 | 6.8 | NMC | 3.2 | - | - |
| P-17 | S-17 | 6.8 | NMC | 3.2 | - | - |
| P-18 | S-18 | 6.8 | NMC | 3.2 | - | - |
| P-19 | S-19 | 6.8 | NMC | 3.2 | - | - |
| P-20 | S-20 | 6.8 | NMC | 3.2 | AB | 0.09 |
| P-21 | S-21 | 6.8 | NMC | 3.2 | AB | 0.09 |
| HP-1 | T-1 | 6.8 | LMO | 4.2 | - | - |
| HP-2 | T-2 | 6.8 | LMO | 4.2 | - | - |
| HP-3 | T-3 | 6.8 | NMC | 3.2 | - | - |
| HP-4 | T-4 | 6.8 | NMC | 3.2 | - | - |
| HP-5 | T-5 | 6.8 | NMC | 3.2 | - | - |

<Notes of table>
The shown "parts by mass" of the solid electrolyte compositions are the total part by mass of the respective components in Table 1 rounded off to two decimal places.
LCO: $LiCoO_2$ (lithium cobalt oxide)
LMO: $LiMn_2O_4$ (lithium manganese oxide)
LCA: $LiNi_{0.85}Co_{0.10}Al_{0.05}O_2$ (lithium nickel cobalt aluminum oxide)
NMC: $LiNi_{1/3}Co_{1/3}Mn_{1/3}O_2$ (lithium nickel manganese cobalt oxide)
AB: Acetylene black

(3) Preparation of solid electrolyte composition for negative electrode layer (hereinafter, also referred to as the composition for a negative electrode)

Fifty zirconia beads having a diameter of 3 mm were injected into a 45 mL zirconia container (manufactured by Fritsch Japan Co., Ltd.), and the solid electrolyte composition synthesized above (S-1) (6.82 g) was added thereto. A negative electrode active material LTO (3.2 g) was added thereto, and then the container was set in a planetary ball mill P-7 (trade name) manufactured by Fritsch Japan Co., Ltd., and the components were continuously stirred at a temperature of 25°C and a rotation speed of 100 rpm for 10 minutes, thereby preparing a composition for a negative electrode N-1.

(4) Preparation of compositions for negative electrode N-2 to N-19 and HN-1 to HN-5

Compositions for a negative electrode N-2 to N-19 and HN-1 to HN-5 were prepared using the same method as for the composition for a negative electrode N-1 except for the fact that the compositions were changed as shown in Table 3.
Here, the compositions for a negative electrode N-1 to N-19 are the solid electrolyte composition of the present invention, and the compositions for a negative electrode HN-1 to HN-5 are comparative solid electrolyte compositions.
Meanwhile, the particle diameters and the ion conductivities of the inorganic solid electrolytes in the composition for a negative electrode N-1 to N-19 and HN-1 to HN-5 were substantially the same as the particle diameters and the ion conductivities of the inorganic solid electrolytes in the corresponding solid electrolyte compositions S-1 to S-19 and T-1 to T-5.

[Table 3]

| Composition for negative electrode | Solid electrolyte composition | | Negative electrode active material | |
|---|---|---|---|---|
| | Type | Parts by mass | Type | Parts by mass |
| N-1 | S-1 | 6.8 | LTO | 3.2 |
| N-2 | S-2 | 4.4 | LTO | 2.8 |
| N-3 | S-3 | 4.4 | LTO | 2.8 |
| N-4 | S-4 | 4.4 | Graphite | 2.8 |
| N-5 | S-5 | 4.4 | Graphite | 2.8 |
| N-6 | S-6 | 4.4 | Si | 2.8 |
| N-7 | S-7 | 6.8 | Si | 4.2 |
| N-8 | S-8 | 6.8 | LTO | 4.2 |
| N-9 | S-9 | 6.8 | LTO | 4.2 |
| N-10 | S-10 | 6.8 | Graphite | 4.2 |
| N-11 | S-11 | 6.8 | Graphite | 3.7 |
| N-12 | S-12 | 6.8 | Graphite | 3.7 |
| N-13 | S-13 | 6.8 | Si | 3.7 |
| N-14 | S-14 | 6.8 | Si | 3.7 |
| N-15 | S-15 | 6.8 | Si | 3.2 |
| N-16 | S-16 | 6.8 | Graphite | 3.2 |
| N-17 | S-17 | 6.8 | Graphite | 3.2 |
| N-18 | S-18 | 6.8 | Graphite | 3.2 |
| N-19 | S-19 | 6.8 | Graphite | 3.2 |
| HN-1 | T-1 | 6.8 | LTO | 4.2 |
| HN-2 | T-2 | 6.8 | Graphite | 4.2 |
| HN-3 | T-3 | 6.8 | Graphite | 3.2 |

(continued)

| Composition for negative electrode | Solid electrolyte composition | | Negative electrode active material | |
|---|---|---|---|---|
| | Type | Parts by mass | Type | Parts by mass |
| HN-4 | T-4 | 6.8 | Graphite | 3.2 |
| HN-5 | T-5 | 6.8 | Graphite | 3.2 |
| <Notes oftable><br>The shown "parts by mass" of the solid electrolyte compositions are the total part by mass of the respective components in Table 1 rounded off to two decimal places.<br>LTO: $Li_4Ti_5O_{12}$ (lithium titanium oxide) | | | | |

<Production of electrode sheet for all-solid state secondary battery>

(1) Production of primer layer

Carbon black (trade name: KETJENBLACK EC600JD, manufactured by Ketjen Black International Company) (50 g) and butadiene rubber (3 g) (product No.: 182907, manufactured by Aldrich-Sigma, Co. LLC.) were added to xylene (100 g) and were dispersed using a planetary mixer for one hour. The mixture was applied onto a 20 $\mu$m-thick aluminum foil (collector) using an applicator (trade name: SA-201 Baker type applicator, manufactured by Tester Sangyo Co., Ltd.) and dried by blowing the air at 100°C for four hours, thereby producing an aluminum foil on which a primer layer was formed. The layer thickness of the primer layer was 20 $\mu$m.

(2) Production of active material layer and electrode sheet for all-solid state secondary battery (hereinafter, also referred to as electrode sheet)

The composition for a positive electrode P-1 prepared above was applied onto the primer layer produced above using an applicator (trade name: SA-201 Baker type applicator, manufactured by Tester Sangyo Co., Ltd.) and heated at 100°C for one hour to remove the dispersion medium, thereby producing a 150 $\mu$m-thick electrode sheet for a positive electrode PS-1 in which the aluminum foil (collector, thickness: 20 $\mu$m), the primer layer (thickness: 20 $\mu$m), and the active material layer (thickness: 110 $\mu$m) were laminated in this order.

(3) Production of electrode sheets PS-2 to PS-21, HPS-1 to HPS-5, PN-1 to PN-19, and HPN-1 to HPN-5

Electrode sheets for a positive electrode PS-2 to PS-21 and HPS-1 to HPS-5 were obtained using the same method as the production of the electrode sheet for a positive electrode PS-1 except for the fact that the composition, the heating temperature, and the thickness of the electrode sheet were changed as shown in Table 4. Electrode sheets for a negative electrode PN-1 to PN-19 and HPN-1 to HPN-5 were produced in the same manner.

Here, the electrode sheets for a positive electrode PS-2 to PS-21 and the electrode sheets for a negative electrode PN-1 to PN-19 are the electrode sheet of the present invention, and the electrode sheets for a positive electrode HPN-1 to HPN-5 and the electrode sheets for a negative electrode HPN-1 to HPN-5 are comparative electrode sheets.

<Testing>

On the electrode sheets for an all-solid state secondary battery produced above, an adhesiveness test was carried out. Hereinafter, the testing method will be described. In addition, the measurement results are summarized in Table 4.

[Testing Example 3] Bonding property test

A 180° peel strength test (JIS Z0237-2009) was carried out on the obtained electrode sheet for an all-solid state secondary battery.

Pressure-sensitive adhesive tape (width: 24 mm, length: 300 mm) (trade name: CELLOTAPE (registered trademark) CT-24, manufactured by Nichiban Co., Ltd.) was attached to the active material layer of the electrode sheet for an all-solid state secondary battery. The tape was folded back 180° by gripping an end of the tape, peeled off 25 mm from the active material layer, then, a single end of a portion of the electrode sheet for an all-solid state secondary battery from which the pressure-sensitive adhesive tape had been peeled off was fixed to a lower-side jig installed in the following tester, and the pressure-sensitive adhesive tape was fixed to an upper-side jig.

The test was carried out at a loading rate of 300 mm/minute. The pressure-sensitive adhesive tape was peeled off 25 mm after the initiation of measurement, then, the measurement values of the pressure-sensitive adhesive forces of the 50 mm-long pressure-sensitive adhesive tape peeled off from the active material layer was averaged, and the average was used as the value of the peeling pressure-sensitive adhesive force (average peel strength (N)).

It is indicated that, as the average peel strength at this time increases, the bonding force becomes stronger.

The peel strength was measured using a combination of a standard-type digital force gauge ZTS-5N and a vertical electric measurement stand MX2 series (all trade names, manufactured by IMADA Co., Ltd.). The rankings of A to C are the passing levels.

<Evaluation Standards>

A: 2.5 N or more
B: 1.5 N or more and less than 2.5 N
C: 1.0 N or more and less than 1.5 N
D: 0.5 N or more and less than 1.0 N
E: Less than 0.5 N

<Manufacturing of all-solid state secondary battery>

(Production of all-solid state secondary battery sheet)

The solid electrolyte composition S-1 was applied onto a TEFLON (registered trademark) sheet and dried at 120°C, thereby forming a solid electrolyte layer. This solid electrolyte layer side and the active material layer side of the electrode sheet for a positive electrode PS-1 produced above were attached together, and the TEFLON (registered trademark) sheet was removed. Furthermore, the active material layer side of the electrode sheet for a negative electrode NS-1 produced above was attached to the solid electrolyte layer side, and the laminate was pressed at 300 MPa, thereby manufacturing an all-solid state secondary battery sheet having a layer constitution illustrated in Fig. 1.

(Production of all-solid state secondary battery)

As illustrated in Fig. 3, a disc-like piece having a diameter of 14.5 mm was cut out from the all-solid state secondary battery sheet 17 manufactured above, was put into a stainless steel 2032-type coin case 16 which a spacer and a washer (both are not illustrated in Fig. 3) were combined into, and was swaged with a force of eight newtons (N) using a torque wrench, thereby manufacturing an all-solid state secondary battery 18.

<Evaluation>

The following voltage evaluation was carried out on the all-solid state secondary batteries of the examples and the comparative examples produced above. The evaluation results are shown in Table 4.

[Testing Example 4] Battery voltage test

The battery voltage of the all-solid state secondary battery produced above was measured using a charging and discharging evaluation device "TOSCAT-3000 (trade name)" manufactured by Toyo System Co., Ltd.

The coin battery was charged at a current density of 2 A/m$^2$ until the battery voltage reached 4.2 V, and, once the battery voltage reached 4.2 V, the coin battery was charged with constant voltage of 4.2 V until the current density reached less than 0.2 A/m$^2$. The coin battery was discharged at a current density of 2 A/m$^2$ until the battery voltage reached 3.0 V. The above-described process was considered as one cycle, the process was repeated three cycles, and the battery voltage after a 5 mAh/g discharging in the third cycle was read and evaluated using the following standards. Meanwhile, the rankings of A to C are the passing levels.

<Evaluation standards>

A: 4.0 V or more
B: 3.9 V or more and less than 4.0 V
C: 3.8 V or more and less than 3.9 V
D: 3.7 V or more and less than 3.8 V
E: Less than 3.7 V

[Table 4]

| Battery | Positive electrode layer | | | | | Solid electrolyte layer | | Negative electrode layer | | | | | Battery voltage |
|---|---|---|---|---|---|---|---|---|---|---|---|---|---|
| | Type | Composition for positive electrode | Heating temperature (°C) | Film thickness (μm) | Bonding force | Type | Film thickness (μm) | Type | Composition for negative electrode | Heating temperature (°C) | Film thickness (μm) | Bonding force | |
| 101 | PS-1 | P-1 | 100 | 150 | B | S-1 | 200 | NS-1 | N-1 | 80 | 150 | C | C |
| 102 | PS-2 | P-2 | 100 | 150 | A | S-2 | 200 | NS-2 | N-2 | 80 | 150 | B | B |
| 103 | PS-3 | P-3 | 100 | 150 | A | S-3 | 200 | NS-3 | N-3 | 100 | 150 | A | C |
| 104 | PS-4 | P-4 | 130 | 150 | B | S-4 | 200 | NS-4 | N-4 | 125 | 150 | A | A |
| 105 | PS-5 | P-5 | 130 | 150 | A | S-5 | 200 | NS-5 | N-5 | 125 | 150 | B | B |
| 106 | PS-6 | P-6 | 140 | 150 | B | S-6 | 200 | NS-6 | N-6 | 125 | 150 | B | A |
| 107 | PS-7 | P-7 | 120 | 150 | A | S-7 | 200 | NS-7 | N-7 | 100 | 150 | A | A |
| 108 | PS-8 | P-8 | 100 | 150 | A | S-8 | 200 | NS-8 | N-8 | 100 | 150 | B | B |
| 109 | PS-9 | P-9 | 100 | 150 | A | S-9 | 200 | NS-9 | N-9 | 80 | 150 | B | A |
| 110 | PS-10 | P-10 | 100 | 150 | B | S-10 | 200 | NS-10 | N-10 | 80 | 150 | A | A |
| 111 | PS-11 | P-11 | 100 | 150 | A | S-11 | 200 | NS-11 | N-11 | 80 | 150 | B | B |
| 112 | PS-12 | P-12 | 110 | 150 | A | S-12 | 200 | NS-12 | N-12 | 105 | 150 | B | B |
| 113 | PS-13 | P-13 | 140 | 150 | B | S-13 | 200 | NS-13 | N-13 | 135 | 150 | A | A |
| 114 | PS-14 | P-14 | 140 | 150 | A | S-14 | 200 | NS-14 | N-14 | 120 | 150 | B | A |
| 115 | PS-15 | P-15 | 140 | 150 | A | S-15 | 200 | NS-15 | N-15 | 120 | 150 | B | A |
| 116 | PS-16 | P-16 | 140 | 150 | A | S-16 | 200 | NS-16 | N-16 | 120 | 150 | A | B |
| 117 | PS-17 | P-17 | 140 | 150 | A | S-17 | 200 | NS-17 | N-17 | 120 | 150 | A | A |
| 118 | PS-18 | P-18 | 120 | 151 | A | S-18 | 201 | NS-18 | N-18 | 120 | 151 | A | A |
| 119 | PS-19 | P-19 | 100 | 152 | B | S-19 | 202 | NS-19 | N-19 | 100 | 152 | B | A |
| 120 | PS-20 | P-20 | 100 | 150 | B | S-20 | 200 | NS-3 | N-3 | 100 | 150 | A | A |
| 121 | PS-21 | P-21 | 100 | 150 | B | S-21 | 200 | NS-3 | N-3 | 100 | 150 | A | A |
| c11 | HPS-1 | HP-1 | 80 | 150 | E | T-1 | 200 | HNS-1 | HN-1 | 80 | 150 | E | E |

34

(continued)

| Battery | Positive electrode layer | | | | | Solid electrolyte layer | | Negative electrode layer | | | | | Battery voltage |
| | Type | Composition for positive electrode | Heating temperature (°C) | Film thickness (μm) | Bonding force | Type | Film thickness (μm) | Type | Composition for negative electrode | Heating temperature (°C) | Film thickness (μm) | Bonding force | |
|---|---|---|---|---|---|---|---|---|---|---|---|---|---|
| c12 | HPS-2 | HP-2 | 100 | 150 | E | T-2 | 200 | HNS-2 | HN-2 | 100 | 150 | E | B |
| c13 | HPS-3 | HP-3 | 100 | 150 | D | T-3 | 200 | HNS-3 | HN-3 | 100 | 150 | D | C |
| cl4 | HPS-4 | HP-4 | 100 | 150 | A | T-4 | 200 | HNS-4 | HN-4 | 80 | 150 | A | E |
| c15 | HPS-5 | HP-5 | 180 | 151 | E | T-5 | 201 | HNS-5 | HN-5 | 120 | 151 | E | C |

As shown in Table 4, in all of the electrode sheets HPS-1 to HPS-3, HPS-5, HNS-1 to HNS-3, and HNS-5 in which the dispersion medium (C2) was not contained or the content ratio of the dispersion medium (C1) to the dispersion medium (C2) was too great and the active material layer was formed using the comparative solid electrolyte composition, the bonding property was insufficient.

In addition, in the comparative all-solid state secondary battery c14 having the electrode sheets HPS-4 and HNS-4 in which the dispersion medium (C1) was not contained and the active material layer was formed using the comparative solid electrolyte composition, the battery voltage was low.

In contrast, it was found that all of the electrode sheets PS-1 to PS-21 and NS-1 to NS-19 obtained using the solid electrolyte composition of the present invention and the manufacturing method of the present invention had a favorable bonding property (the bonding property among particles, the bonding property between the active material layer and the collector, and the like), and all of the all-solid state secondary batteries 101 to 121 having the above-described electrode sheet had a high battery voltage.

Explanation of References

| | |
|---|---|
| 1: | negative electrode collector |
| 2: | negative electrode active material layer |
| 3: | solid electrolyte layer |
| 4: | positive electrode active material layer |
| 5: | positive electrode collector |
| 6: | operation portion |
| 10: | all-solid state secondary battery |
| 11: | upper portion-supporting plate |
| 12: | lower portion-supporting plate |
| 13: | coin-type jig |
| 14: | coin case |
| 15: | solid electrolyte-containing sheet |
| S: | screw |
| 16: | 2032-type coin case |
| 17: | all-solid state secondary battery sheet |
| 18: | all-solid state secondary battery |

**Claims**

1. A solid electrolyte composition comprising:

   an inorganic solid electrolyte (A) having conductivity of ions of metals belonging to Group I or II of the periodic table;
   a binder (B1); and
   a dispersion medium (C) containing at least one dispersion medium (C1) below and at least one dispersion medium (C2) below at a mass ratio (dispersion medium (C1)/dispersion medium (C2)) of 20/80 to 99/1,
   dispersion medium (C1): a saturated aliphatic compound or alicyclic compound having a boiling point of 80°C or higher and lower than 200°C, and
   dispersion medium (C2): an aromatic compound having a boiling point of 100°C or higher and lower than 220°C.

2. The solid electrolyte composition according to claim 1,

   wherein a difference between a boiling point $TC_1$ of the dispersion medium (C1) and a boiling point $TC_2$ of the dispersion medium (C2) satisfies the following expression,

$$(TC_2 - TC_1) \geq 10°C,$$

   and

wherein the dispersion medium (C1) is preferably an alicyclic compound, and
wherein both the dispersion medium (C1) and the dispersion medium (C2) more preferably include only carbon atoms and hydrogen atoms.

3. The solid electrolyte composition according to claim 1 or 2,

   wherein the binder (B1) is at least one selected from the group consisting of an acrylic resin, a polyurethane resin, a polyurea resin, a polyimide resin, a fluorine-containing resin, and a hydrocarbon-based thermoplastic resin, and
   wherein the binder (B1) preferably has a polar group, and
   wherein the binder (B1) is more preferably a particulate polymer having a volume-average particle diameter of 0.05 to 50 $\mu$m.

4. The solid electrolyte composition according to any one of claims 1 to 3,
   wherein the inorganic solid electrolyte (A) is a sulfide-based inorganic solid electrolyte, and preferably further comprising:
   an active material.

5. The solid electrolyte composition according to any one of claims 1 to 4, further comprising:
   a conductive auxiliary agent.

6. The solid electrolyte composition according to any one of claims 1 to 5, further comprising:
   a lithium salt.

7. The solid electrolyte composition according to any one of claims 1 to 6, further comprising:
   an ionic liquid.

8. An electrode sheet for an all-solid state secondary battery including a primer layer between an active material layer formed from the solid electrolyte composition according to claim 1 and a collector,
   wherein the active material layer contains the binder (B1), the primer layer contains a binder (B2), and the binder (B2) is insoluble in the dispersion medium (C1) and is soluble in the dispersion medium (C2).

9. The electrode sheet for an all-solid state secondary battery according to claim 8,
   wherein a polymer constituting the binder (B2) includes a rubber material.

10. The electrode sheet for an all-solid state secondary battery according to claim 8 or 9,
    wherein the binder (B2) is partially eluted to the active material layer.

11. The electrode sheet for an all-solid state secondary battery according to claim 10,
    wherein a polymer constituting the binder (B2) includes hydrocarbon-based rubber.

12. A method for manufacturing the electrode sheet for an all-solid state secondary battery according to claim 10 or 11, comprising:
    a step of forming the primer layer using the dispersion medium (C2) on the collector, drying the primer layer, and applying the solid electrolyte composition according to claim 1 onto the primer layer.

13. A method for manufacturing the electrode sheet for an all-solid state secondary battery according to claim 10 or 11, comprising:

    a step of applying the solid electrolyte composition according to claim 1 onto the primer layer and then heating and drying the solid electrolyte composition,
    wherein a heating and drying temperature is the boiling point $TC_1$ of the dispersion medium (C1) or higher and lower than the boiling point $TC_2$ of the dispersion medium ($C_2$).

14. An all-solid state secondary battery comprising:
    the electrode sheet for an all-solid state secondary battery according to claim 10 or 11.

15. A method for manufacturing an all-solid state secondary battery,

wherein an all-solid state secondary battery is manufactured using the method for manufacturing an electrode sheet for an all-solid state secondary battery according to claim 12 or 13.

**Patentansprüche**

1. Festelektrolytzusammensetzung, umfassend:

    einen anorganischen Festelektrolyt (A) mit Ionenleitfähigkeit von Metallen, die der Gruppe I oder II des Periodensystems angehören;
    ein Bindemittel (B1); und
    ein Dispersionsmedium (C), enthaltend mindestens ein untenstehendes Dispersionsmedium (C1) und mindestens ein untenstehendes Dispersionsmedium (C2) in einem Massenverhältnis (Dispersionsmedium (C1)/Dispersionsmedium (C2)) von 20/80 bis 99/1,
    Dispersionsmedium (C1): eine gesättigte aliphatische Verbindung oder alicyclische Verbindung mit einem Siedepunkt von 80°C oder höher und niedriger als 200°C, und
    Dispersionsmedium (C2): eine aromatische Verbindung mit einem Siedepunkt von 100°C oder höher und niedriger als 220°C.

2. Festelektrolytzusammensetzung gemäß Anspruch 1,
   wobei ein Unterschied zwischen einem Siedepunkt $TC_1$ des Dispersionsmediums (C1) und einem Siedepunkt $TC_2$ des Dispersionsmediums (C2) den folgenden Ausdruck erfüllt:

$$(TC_2 - TC_1) \geq 10°C,$$

   und
   wobei das Dispersionsmedium (C1) vorzugsweise eine alicyclische Verbindung ist, und
   wobei mehr bevorzugt sowohl das Dispersionsmedium (C1) als auch das Dispersionsmedium (C2) nur Kohlenstoffatome und Wasserstoffatome enthalten.

3. Festelektrolytzusammensetzung gemäß Anspruch 1 oder 2,
   wobei das Bindemittel (B1) mindestens eines ist, das aus der Gruppe ausgewählt ist, die aus einem Acrylharz, einem Polyurethanharz, einem Polyharnstoffharz, einem Polyimidharz, einem fluorhaltigen Harz und einem thermoplastischen Kohlenwasserstoff-basierten Harz besteht,
   wobei das Bindemittel (B1) vorzugsweise eine polare Gruppe aufweist, und
   wobei das Bindemittel (B1) mehr bevorzugt ein partikelförmiges Polymer mit einem volumenmittleren Partikeldurchmesser von 0,05 bis 50 μm ist.

4. Festelektrolytzusammensetzung gemäß einem der Ansprüche 1 bis 3,
   wobei der anorganische Festelektrolyt (A) ein anorganischer Sulfid-basierter Festelektrolyt ist und vorzugsweise zusätzlich umfasst:
   ein Aktivmaterial.

5. Festelektrolytzusammensetzung gemäß einem der Ansprüche 1 bis 4, zusätzlich umfassend:
   ein leitfähiges Hilfsmittel.

6. Festelektrolytzusammensetzung gemäß einem der Ansprüche 1 bis 5, zusätzlich umfassend:
   ein Lithiumsalz.

7. Festelektrolytzusammensetzung gemäß einem der Ansprüche 1 bis 6, zusätzlich umfassend:
   eine ionische Flüssigkeit.

8. Elektrodenblatt für eine Festkörpersekundärbatterie, das eine Primerschicht zwischen einer aus der Festelektrolytzusammensetzung gemäß Anspruch 1 gebildeten Aktivmaterialschicht und einem Kollektor beinhaltet;
   wobei die Aktivmaterialschicht das Bindemittel (B1) enthält, die Primerschicht ein Bindemittel (B2) enthält, und das Bindemittel (B2) in dem Dispersionsmedium (C1) unlöslich ist und in dem Dispersionsmedium (C2) löslich ist.

**9.** Elektrodenblatt für eine Festkörpersekundärbatterie gemäß Anspruch 8,
wobei ein Polymer, das das Bindemittel (B2) bildet, ein Kautschukmaterial enthält.

**10.** Elektrodenblatt für eine Festkörpersekundärbatterie gemäß Anspruch 8 oder 9,
wobei das Bindemittel (B2) teilweise zur Aktivmaterialschicht eluiert wird.

**11.** Elektrodenblatt für eine Festkörpersekundärbatterie gemäß Anspruch 10,
wobei ein Polymer, das das Bindemittel (B2) bildet, einen Kohlenwasserstoff-basierten Kautschuk enthält.

**12.** Verfahren zur Herstellung des Elektrodenblatts für eine Festkörpersekundärbatterie gemäß Anspruch 10 oder 11,
umfassend:
einen Schritt des Bildens der Primerschicht unter Verwendung des Dispersionsmediums (C2) auf dem Kollektor,
des Trocknens der Primerschicht und des Aufbringens der Festelektrolytzusammensetzung gemäß Anspruch 1 auf
die Primerschicht.

**13.** Verfahren zur Herstellung des Elektrodenblatts für eine Festkörpersekundärbatterie gemäß Anspruch 10 oder 11,
umfassend:

einen Schritt des Aufbringens der Festelektrolytzusammensetzung gemäß Anspruch 1 auf die Primerschicht
und des anschließenden Erhitzens und Trocknens der Festelektrolytzusammensetzung;
wobei eine Heiz- und Trocknungstemperatur der Siedepunkt $TC_1$ des Dispersionsmediums (C1) oder höher
und niedriger als der Siedepunkt $TC_2$ des Dispersionsmediums (C2) ist.

**14.** Festkörpersekundärbatterie, umfassend:
das Elektrodenblatt für eine Festkörpersekundärbatterie gemäß Anspruch 10 oder 11.

**15.** Verfahren zur Herstellung einer Festkörpersekundärbatterie,
bei dem eine Festkörpersekundärbatterie unter Verwendung des Verfahrens zur Herstellung eines Elektrodenblatts
für eine Festkörpersekundärbatterie gemäß Anspruch 12 oder 13 hergestellt wird.


**Revendications**

**1.** Composition électrolyte solide comprenant :

un électrolyte solide inorganique (A) ayant une conductivité d'ions métalliques appartenant au Groupe I ou II
du tableau périodique ;
un liant (B1); et
un milieu de dispersion (C) contenant au moins un milieu de dispersion (C1) ci-dessous et au moins un milieu
de dispersion (C2) ci-dessous à un rapport en masse (milieu de dispersion (C1)/milieu de dispersion (C2)) de
20/80 à 99/1,
milieu de dispersion (C1) : composé aliphatique instauré ou composé alicyclique ayant un point d'ébullition de
80°C ou supérieur et inférieur à 200°C, et
milieu de dispersion (C2) : composé aromatique ayant un point d'ébullition de 100°C ou supérieur et inférieur
à 220°C.

**2.** La composition électrolyte solide selon la revendication 1,

dans laquelle une différence entre un point d'ébullition $TC_1$ du milieu de dispersion (C1) et un point d'ébullition
$TC_2$ du milieu de dispersion (C2) satisfait l'expression suivante,

$$(TC_2\text{-}TC_1) \geq 10°C, \text{ et}$$

et
dans laquelle le milieu de dispersion (C1) est préférablement un composé alicyclique, et
dans laquelle le milieu de dispersion (C1) et le milieu de dispersion (C2) plus préférablement comportent tous deux seulement des atomes de carbone et des atomes d'hydrogène.

3. La composition électrolyte solide selon la revendication 1 ou 2,

dans laquelle le liant (B1) est au moins l'un choisi parmi le groupe constitué d'une résine acrylique, une résine polyuréthane, une résine polyurée, une résine polyimide, une résine contenant du fluor, et une résine thermoplastique à base d'hydrocarbone, et
dans laquelle le liant (B1) a préférablement un groupe polaire, et
dans laquelle le liant (B1) est plus préférablement un polymère particulaire ayant un diamètre de particule moyen en volume de 0,05 à 50 $\mu$m.

4. La composition électrolyte solide selon l'une quelconque des revendications 1 à 3,
dans laquelle l'électrolyte solide inorganique (A) est un électrolyte solide inorganique à base de sulfure, et préférablement comprenant en outre :
un matériau actif.

5. La composition électrolyte solide selon l'une quelconque des revendications 1 à 4, comprenant en outre :
un agent auxiliaire conducteur.

6. La composition électrolyte solide selon l'une quelconque des revendications 1 à 5, comprenant en outre :
un sel de lithium.

7. La composition électrolyte solide selon l'une quelconque des revendications 1 à 6, comprenant en outre :
un liquide ionique.

8. Feuille d'électrode pour une batterie secondaire à l'état entièrement solide comportant une couche d'amorce entre une couche de matériau actif formée la composition électrolyte solide selon la revendication 1 et un collecteur,
dans laquelle la couche de matériau actif contient le liant (B1), la couche d'amorce contient un liant (B2), et le liant (B2) est insoluble dans le milieu de dispersion (C1) et est soluble dans le milieu de dispersion (C2).

9. La feuille d'électrode pour une batterie secondaire à l'état entièrement solide selon la revendication 8,
dans laquelle un polymère constituent le liant (B2) comporte un matériau caoutchouteux.

10. La feuille d'électrode pour une batterie secondaire à l'état entièrement solide selon la revendication 8 ou 9,
dans laquelle le liant (B2) est partiellement élué à la couche de matériau actif.

11. La feuille d'électrode pour une batterie secondaire à l'état entièrement solide selon la revendication 10,
dans laquelle un polymère constituant le liant (B2) comporte du caoutchouc à base d'hydrocarbone.

12. Procédé de fabrication de la feuille d'électrode pour une batterie secondaire à l'état entièrement solide selon la revendication 10 ou 11, comprenant :
une étape de formation de la couche d'amorce en utilisant le milieu de dispersion (C2) sur la collecteur, séchage de la couche d'amorce, et application de la composition électrolyte solide selon la revendication 1 sur la couche d'amorce.

13. Procédé de fabrication de la feuille d'électrode pour une batterie secondaire à l'état entièrement solide selon la revendication 10 ou 11, comprenant :

une étape d'application de la composition électrolyte solide selon la revendication 1 sur la couche d'amorce et ensuite chauffage et séchage de la composition électrolyte solide,
dans lequel une température de chauffage et de séchage est le point d'ébullition $TC_1$ du milieu de dispersion (C1) ou supérieure et inférieure au point d'ébullition $TC_2$ du milieu de dispersion (C2).

14. Batterie secondaire à l'état entièrement solide comprenant :
la feuille d'électrode pour une batterie secondaire à l'état entièrement solide selon la revendication 10 ou 11.

15. Procédé de fabrication d'une batterie secondaire à l'état entièrement solide,
dans lequel une batterie secondaire à l'état entièrement solide est fabriquée en utilisant le procédé de fabrication d'une feuille d'électrode pour une batterie secondaire à l'état entièrement solide selon la revendication 12 ou 13.

## FIG. 1

## FIG. 2

## FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011014387 A
- JP 2013008611 A
- WO 2015129704 A1
- US 2015086875 A1
- US 2014127579 A1
- WO 2012026583 A1
- JP 2015082362 A
- WO 2016136983 A1
- JP 2017016796 A
- JP 2015088486 A
- JP 2015088480 A

**Non-patent literature cited in the description**

- **T. OHTOMO ; A. HAYASHI ; M. TATSUMISAGO ; Y. TSUCHIDA ; S. HAMGA ; K. KAWAMOTO.** *Journal of Power Sources,* 2013, vol. 233, 231-235
- **A. HAYASHI ; S. HAMA ; H. MORIMOTO ; M. TATSUMISAGO ; T. MINAMI.** *Chem. Lett.,* 2001, 872, , 873